# EUROPEAN PATENT APPLICATION

(11) **EP 4 629 673 A1**
(43) Date of publication of application: **08.10.2025**
(21) Application number: 23910506.7
(22) Date of filing: 25.12.2023
(51) Int. Cl.: H04W 4/90, H04L 65/1016, H04W 88/04

(54) **COMMUNICATION METHOD AND APPARATUS, COMMUNICATION DEVICE, AND STORAGE MEDIUM**

(30) Priority: 27.12.2022 CN 202211690057; 04.04.2023 CN 202310361414
(71) Applicant: Vivo Mobile Communication Co., Ltd., Dongguan, Guangdong 523863 (CN)
(72) Inventor: CHENG, Sihan, Dongguan, Guangdong 523863 (CN); WANG, Wen, Dongguan, Guangdong 523863 (CN)
(74) Representative: Murgitroyd & Company
(86) International application number: PCT/CN2023/141573
(87) International publication number: WO 2024/140580

(57) **Abstract**

This application discloses a communication method and apparatus, a communication device, and a storage medium, and pertains to the field of communication technologies. The communication method in embodiments of this application includes: sending, by a first UE, an IMS registration message to a first network side device via a second UE, where the IMS registration message includes first information; and receiving, by the first UE via the second UE, a response message sent by the first network side device, to complete an IMS registration process, where the first information includes at least one of the following: information used to indicate that the first UE is a remote UE; information used to indicate that the first UE sends a message via a relay UE; information used to indicate that the first UE has not performed network registration; information used to indicate that the first UE has not established an emergency PDU session; IP address information of the first UE; and a PLMN identifier of the first UE.

## Description

### CROSS-REFERENCE TO RELATED APPLICATION

This application claims priority to Chinese Patent No. 202211690057.X, filed with China on December 27, 2022, which is incorporated herein by reference in its entirety; and claims priority to Chinese Patent No. 202310361414.6, filed with China on April 04, 2023, which is incorporated herein by reference in its entirety.

### TECHNICAL FIELD

This application pertains to the field of communication technologies, and specifically relates to a communication method and apparatus, a communication device, and a storage medium.

### BACKGROUND

To expand network coverage, a UE located on a cell edge or outside network coverage may access a network via a relay UE (relay UE) to obtain a network service. This manner may be referred to as relay communication. In a layer 3-relay communication scenario (Layer-3 UE-to-Network relay), a relay UE (relay UE) may provide a relay service for a remote UE (Remote UE). In a process in which the relay UE provides the relay service for the remote UE, the relay UE allocates an internet protocol (Internet Protocol, IP) address to the remote UE, and the remote UE generates an IP data packet by using the IP address allocated by the relay UE.

However, when the remote UE executes IP multimedia subsystem (IP Multimedia Subsystem, IMS) emergency registration via the relay UE, the remote UE carries the IP address allocated by the relay UE. A proxy call session control function (Proxy-Call Session Control Function, P-CSCF) of an IMS network cannot obtain identifier information of the remote UE based on the IP address, resulting in an error in a subsequent IMS procedure. Consequently, the remote UE cannot initiate an emergency service.

### SUMMARY

Embodiments of this application provide a communication method and apparatus, a communication device, and a storage medium, to resolve a problem that an error in a subsequent IMS procedure is caused and consequently a remote UE cannot initiate an emergency service because a P-CSCF cannot obtain identifier information of the remote UE.

According to a first aspect, a communication method is provided. The method includes: sending, by a first UE, an IMS registration message to a first network side device via a second UE, where the IMS registration message includes first information; and receiving, by the first UE via the second UE, a response message sent by the first network side device, to complete an IMS registration process, where the first information includes at least one of the following: information used to indicate that the first UE is a remote UE; information used to indicate that the first UE sends a message via a relay UE; information used to indicate that the first UE has not performed network registration; information used to indicate that the first UE has not established an emergency protocol data unit (Protocol Data Unit, PDU) session; IP address information of the first UE; and a public land mobile network (Public Land Mobile Network, PLMN) identifier of the first UE.

According to a second aspect, a communication apparatus is provided, applied to a first UE. The apparatus includes a sending module and a receiving module. The sending module is configured to send an IMS registration message to a first network side device via a second UE, where the IMS registration message includes first information. The receiving module is configured to receive, via the second UE, a response message sent by the first network side device, to complete an IMS registration process. The first information includes at least one of the following: information used to indicate that the first UE is a remote UE; information used to indicate that the first UE sends a message via a relay UE; information used to indicate that the first UE has not performed network registration; information used to indicate that the first UE has not established an emergency PDU session; IP address information of the first UE; and a PLMN identifier of the first UE.

In this embodiment of this application, a first UE may send an IMS registration message to a first network side device via a second UE, to carry first information, so that the first network side device executes, based on the first information, a related operation of obtaining identifier information of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

According to a third aspect, a communication method is provided. The method includes: receiving, by a first network side device, an IMS registration message sent by a first UE, where the IMS registration message includes first information; and determining, by the first network side device based on the first information, to skip a process of obtaining identifier information of the first UE; or sending, by the first network side device, a first message to a second network side device, where the first message is used to request identifier information of the first UE, the first message includes the first information, and the first information is used to obtain the identifier information of the first UE.

According to a fourth aspect, a communication apparatus is provided, applied to a first network side device. The apparatus includes a receiving module and an execution module. The receiving module is configured to receive an IMS registration message sent by a first UE, where the IMS registration message includes first information. The execution module is configured to: determine, based on the first information, to skip a process of obtaining identifier information of the first UE; or send a first message to a second network side device, where the first message is used to request identifier information of the first UE, the first message includes the first information, and the first information is used to obtain the identifier information of the first UE.

In this embodiment of this application, a first network side device may receive an IMS registration message that is sent by a first UE and that carries first information, to determine, based on the first information, to skip a process of obtaining identifier information of the first UE, or request identifier information of the first UE from a second network side device, to complete an IMS registration process. This can avoid a problem that an error in a subsequent IMS procedure is caused and consequently a remote UE cannot initiate an emergency service because the first network side device cannot obtain identifier information of the remote UE. Therefore, the first UE executes an emergency service via the second UE.

According to a fifth aspect, a communication method is provided. The method includes: receiving, by a second UE, a direct link establishment request sent by a first UE, where the direct link establishment request includes a first identifier of the first UE; and sending, by the second UE, the first identifier of the first UE to a third network side device, where the first identifier of the first UE is used to obtain a second identifier of the first UE.

According to a sixth aspect, a communication apparatus is provided, applied to a second UE. The apparatus includes a receiving module and a sending module. The receiving module is configured to receive a direct link establishment request sent by a first UE, where the direct link establishment request includes a first identifier of the first UE. The sending module is configured to send the first identifier of the first UE to a third network side device, where the first identifier of the first UE is used to obtain a second identifier of the first UE.

In this embodiment of this application, a second UE may receive a direct link establishment request sent by a first UE, where the request carries a first identifier of the first UE, and a second UE may send the first identifier of the first UE to a third network side device, so that the third network side device obtains a second identifier of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

According to a seventh aspect, a communication method is provided. The method includes: receiving, by a third network side device, a first identifier of a first UE sent by a second UE; and obtaining, by the third network side device, a second identifier of the first UE based on the first identifier of the first UE.

According to an eighth aspect, a communication apparatus is provided, applied to a third network side device. The apparatus includes a receiving module and an obtaining module. The receiving module is configured to receive a first identifier of a first UE sent by a second UE. The obtaining module is configured to obtain a second identifier of the first UE based on the first identifier of the first UE.

In this embodiment of this application, a third network side device may receive a first identifier of a first UE sent by a second UE, and obtain a second identifier of the first UE based on the first identifier of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

According to a ninth aspect, a communication method is provided. The method includes: receiving, by a second network side device, a first message sent by a first network side device, where the first message is used to request identifier information of a first UE, and the first message includes first information; and obtaining, by the second network side device, the identifier information of the first UE based on the first information.

According to a tenth aspect, a communication apparatus is provided, applied to a second network side device. The apparatus includes a receiving module and an obtaining module. The receiving module is configured to receive a first message sent by a first network side device, where the first message is used to request identifier information of a first UE, and the first message includes first information. The obtaining module is configured to obtain the identifier information of the first UE based on the first information.

In this embodiment of this application, a second network side device may receive a first message that is sent by a first network side device and that carries first information, and obtain identifier information of a first UE based on the first information, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

According to an eleventh aspect, a communication method is provided. The method includes: sending, by a first network side device, a third message to a second network side device when an IMS registration message received from a first UE does not include first information and it is determined that the first network side device does not have an IMS network-to-network interface NNI with an HPLMN of the first UE, where the third message is used to request identifier information of the first UE.

According to a twelfth aspect, a communication apparatus is provided, applied to a first network side device. The apparatus includes a sending module. The sending module is configured to send a third message to a second network side device when an IMS registration message received from a first UE does not include first information and it is determined that the first network side device does not have an IMS network-to-network interface NNI with an HPLMN of the first UE, where the third message is used to request identifier information of the first UE.

In this embodiment of this application, a first network side device may send a third message to a second network side device when an IMS registration message of a first UE does not include first information and it is determined that the first network side device does not have an IMS network-to-network interface NNI with an HPLMN of the first UE, to request identifier information of the first UE, so as to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

According to a thirteenth aspect, a communication device is provided. The communication device includes a processor and a memory, the memory stores a program or an instruction that is executable on the processor, and the program or the instruction is executed by the processor to implement the steps of the method according to the first aspect, or the steps of the method according to the third aspect, or the steps of the method according to the fifth aspect, or the steps of the method according to the seventh aspect, or the steps of the method according to the ninth aspect, or the steps of the method according to the eleventh aspect.

According to a fourteenth aspect, a UE is provided, including a processor and a communication interface. The communication interface is configured to: send an IMS registration message to a first network side device via a second UE, where the IMS registration message includes first information; and receive, via the second UE, a response message sent by the first network side device, to complete an IMS registration process. The first information includes at least one of the following: information used to indicate that the first UE is a remote UE; information used to indicate that the first UE sends a message via a relay UE; information used to indicate that the first UE has not performed network registration; information used to indicate that the first UE has not established an emergency PDU session; IP address information of the first UE; and a PLMN identifier of the first UE.

According to a fifteenth aspect, a network side device is provided, including a processor and a communication interface. The communication interface is configured to receive an IMS registration message sent by a first UE, where the IMS registration message includes first information. The processor is configured to: determine, based on the first information, to skip a process of obtaining identifier information of the first UE; or send a first message to a second network side device, where the first message is used to request identifier information of the first UE, the first message includes the first information, and the first information is used by the second network side device to obtain the identifier information of the first UE.

According to a sixteenth aspect, a UE is provided, including a processor and a communication interface. The communication interface is configured to: receive a direct link establishment request sent by a first UE, where the direct link establishment request includes a first identifier of the first UE; and send the first identifier of the first UE to a third network side device, where the first identifier of the first UE is used by the third network side device to obtain a second identifier of the first UE.

According to a seventeenth aspect, a network side device is provided, including a processor and a communication interface. The communication interface is configured to receive a first identifier of a first UE sent by a second UE. The processor is configured to obtain a second identifier of the first UE based on the first identifier of the first UE.

According to an eighteenth aspect, a network side device is provided, including a processor and a communication interface. The communication interface is configured to receive a first message sent by a first network side device, where the first message is used to request identifier information of a first UE, and the first message includes first information. The processor is configured to obtain the identifier information of the first UE based on the first information.

According to a nineteenth aspect, a network side device is provided, including a processor and a communication interface. The communication interface is configured to send a third message to a second network side device when an IMS registration message received from a first UE does not include first information and it is determined that the network side device does not have an IMS network-to-network interface NNI with an HPLMN of the first UE, where the third message is used to request identifier information of the first UE.

According to a twentieth aspect, a communication system is provided, including: a first UE, a first network side device, a second UE, a third network side device, and a second network side device. The first UE may be configured to perform the steps of the communication method according to the first aspect, the first network side device may be configured to perform the steps of the communication method according to the third aspect or the communication method according to the eleventh aspect, the second UE may be configured to perform the steps of the communication method according to the fifth aspect, the third network side device may be configured to perform the steps of the communication method according to the seventh aspect, and the second network side device may be configured to perform the steps of the communication method according to the ninth aspect.

According to a twenty-first aspect, a readable storage medium is provided. The readable storage medium stores a program or an instruction, and the program or the instruction is executed by a processor to implement the steps of the method according to the first aspect, or the steps of the method according to the third aspect, or the steps of the method according to the fifth aspect, or the steps of the method according to the seventh aspect, or the steps of the method according to the ninth aspect, or the steps of the method according to the eleventh aspect.

According to a twenty-second aspect, a chip is provided. The chip includes a processor and a communication interface, the communication interface is coupled to the processor, and the processor is configured to run a program or an instruction to implement the method according to the first aspect, or implement the method according to the third aspect, or implement the method according to the fifth aspect, or implement the method according to the seventh aspect, or implement the method according to the ninth aspect, or implement the method according to the eleventh aspect.

According to a twenty-third aspect, a computer program/program product is provided. The computer program/program product is stored in a storage medium, and the computer program/program product is executed by at least one processor to implement the steps of the communication method according to the first aspect, or the steps of the communication method according to the third aspect, or the steps of the communication method according to the fifth aspect, or the steps of the communication method according to the seventh aspect, or the steps of the communication method according to the ninth aspect, or the steps of the communication method according to the eleventh aspect.

### BRIEF DESCRIPTION OF DRAWINGS

FIG. 1 is a schematic architecture diagram of a wireless communication system according to an embodiment of this application;
FIG. 2 is a first flowchart of a communication method according to an embodiment of this application;
FIG. 3 is a second flowchart of a communication method according to an embodiment of this application;
FIG. 4 is a third flowchart of a communication method according to an embodiment of this application;
FIG. 5 is a fourth flowchart of a communication method according to an embodiment of this application;
FIG. 6 is a fifth flowchart of a communication method according to an embodiment of this application;
FIG. 7 is a sixth flowchart of a communication method according to an embodiment of this application;
FIG. 8 is a seventh flowchart of a communication method according to an embodiment of this application;
FIG. 9 is an eighth flowchart of a communication method according to an embodiment of this application;
FIG. 10 is a ninth flowchart of a communication method according to an embodiment of this application;
FIG. 11 is a tenth flowchart of a communication method according to an embodiment of this application;
FIG. 12 is an eleventh flowchart of a communication method according to an embodiment of this application;
FIG. 13 is a first schematic structural diagram of a communication apparatus according to an embodiment of this application;
FIG. 14 is a second schematic structural diagram of a communication apparatus according to an embodiment of this application;
FIG. 15 is a third schematic structural diagram of a communication apparatus according to an embodiment of this application;
FIG. 16 is a fourth schematic structural diagram of a communication apparatus according to an embodiment of this application;
FIG. 17 is a fifth schematic structural diagram of a communication apparatus according to an embodiment of this application;
FIG. 18 is a schematic structural diagram of hardware of a communication device according to an embodiment of this application;
FIG. 19 is a schematic structural diagram of hardware of a UE according to an embodiment of this application; and
FIG. 20 is a schematic structural diagram of hardware of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In the specification and claims of this application, the terms "first", "second", and the like are intended to distinguish between similar objects but do not describe a specific order or sequence. It should be understood that the terms used in such a way are interchangeable in proper circumstances so that the embodiments of this application can be implemented in orders other than the order illustrated or described herein. Objects distinguished by "first" and "second" are usually of a same type, and a quantity of objects is not limited. For example, there may be one or more first objects. In addition, "or" in the specification and claims represents at least one of connected objects. For example, "A or B" covers three solutions: Solution 1: A is included and B is not included; Solution 2: B is included and A is not included; and Solution 3: both A and B are included. The character "/" generally indicates an "or" relationship between associated objects. The term "indication" in the specification and claims of this application may be an explicit indication or an implicit indication. The explicit indication may be understood as: a transmitter explicitly notifies, in a sent indication, a receiver of a result of an operation or a request that needs to be performed. The implicit indication may be understood as: a receiver performs determining based on an indication sent by a transmitter, and determines, based on a determining result, a result of an operation or a request that needs to be performed.

It should be noted that technologies described in the embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. The following describes a New Radio (New Radio, NR) system for example purposes, and NR terms are used in most of the following descriptions. These technologies can also be applied to applications other than an NR system application, such as a 6th generation (6th Generation, 6G) communication system.

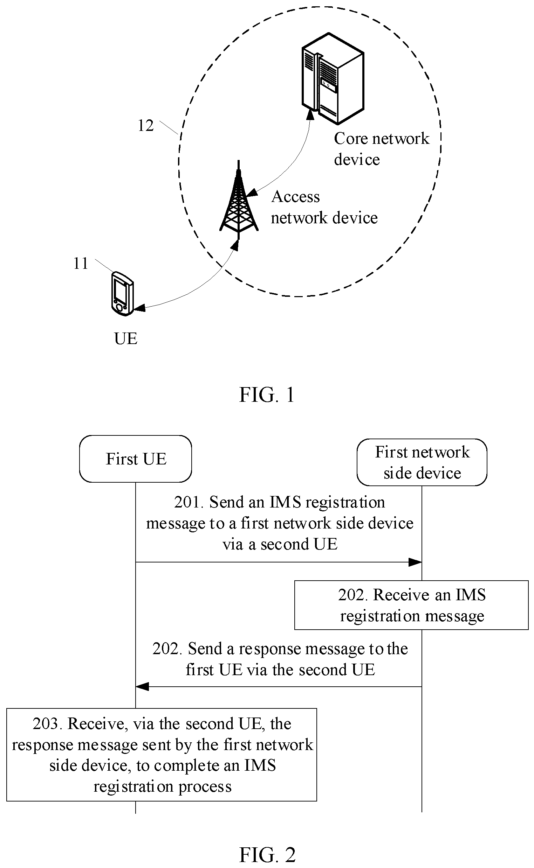

FIG. 1 is a block diagram of a wireless communication system to which the embodiments of this application can be applied. The wireless communication system includes a UE 11 and a network side device 12. The UE 11 may be a UE side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, such as a refrigerator, a television, a washing machine, or a furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, and a smart chain), a smart wrist strap, a smart dress, and the like. In addition to the foregoing UE device, the UE may be a chip in the UE, such as a modem (Modem) chip or a system on chip (System on Chip, SoC). It should be noted that a specific type of the UE 11 is not limited in the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. As long as a same technical effect is achieved, the base station is not limited to a specified technical term. It should be noted that, in this application, only a base station in an NR system is used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rule function unit (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

With reference to the accompanying drawings, the following describes in detail the communication method provided in the embodiments of this application by using some embodiments and application scenarios thereof.

To expand network coverage, a UE located on a cell edge or outside network coverage may access a network via a relay UE to obtain a network service. This manner may be referred to as relay communication.

In a layer 3 relay communication scenario (Layer-3 UE-to-Network relay), a relay UE (relay UE) may provide a relay service for a remote UE (Remote UE). For example, after receiving service data from the remote UE, the relay UE forwards the service data to a network through routing, or after receiving data sent by a network to the remote UE, the relay UE forwards the data to the remote UE through routing. In the process in which the relay UE provides the relay service for the remote UE, the relay UE allocates an IP address to the remote UE. The remote UE generates an IP packet by using the IP address allocated by the relay UE. If the relay UE only has an IPv4 address, the relay UE allocates a private network IP address to the remote UE. After receiving the IP packet that includes the private network address and that is of the remote UE, the relay UE translates the private network address into a public network address by means of network address translation (Network Address Translation, NAT) and sends the public network address to the network.

In an existing IMS mechanism, when UE is in a roaming (roaming) state, if there is no interface between a proxy call session control function (Proxy Call Session Control Function, P-CSCF) of a visiting (visiting) network and a serving call session control function (Serving CSCF, S-CSCF) of a home (Home) network of the UE, the P-CSCF needs to obtain identifier information of the UE from a policy and charging rules function (Policy and Charging Rules Function, PCRF) of a 4G network or a policy control function (Policy Control Function, PCF) of a 5G network. When the P-CSCF needs to obtain the identifier information of the UE, the P-CSCF sends an IP address of the UE to the PCRF/PCF, and the PCRF/PCF obtains the identifier information of the UE based on the IP address of the UE and sends the identifier information to the P-CSCF. The P-CSCF compares the identifier information of the UE obtained from the PCRF/PCF with identifier information reported by the UE by using an IMS message. If the two are the same, the UE is considered as valid UE, and a subsequent IMS procedure is continued. Otherwise, if the UE is considered as invalid UE, the IMS procedure is terminated.

When the remote UE initiates IMS emergency registration via the relay UE, the remote UE carries an IP address allocated by the relay UE. A P-CSCF of an IMS network cannot obtain identifier information of the remote UE based on the IP address, resulting in an error in a subsequent IMS procedure. Consequently, the remote UE cannot initiate an emergency (emergency) service, which endangers user security.

For the foregoing technical problems, the embodiments of this application provide the following technical solutions:

Solution 1: When a first UE initiates an IMS registration message (for example, an IMS emergency registration (emergency registration) message) to a first network side device (for example, a P-CSCF) via a second UE, first information may be carried, so that the first network side device can determine, based on the first information, to skip a process of obtaining identifier information of the first UE.

In solution 1, the first information includes at least one of the following:
information used to indicate that the first UE is a remote UE;
information used to indicate that the first UE sends a message via a relay UE;
information used to indicate that the first UE has not performed network registration; and
information used to indicate that the first UE has not established an emergency PDU session.

Solution 2: When a first UE initiates an IMS registration message to a first network side device via a second UE (a relay UE), first information may be carried, so that the first network side device can send, to a second network side device (for example, a PCF), a message for requesting identifier information of the first UE, where the message includes the first information.

In solution 2, the first information includes at least one of the following:
IP address information of the first UE; and
a PLMN identifier of the first UE.

Solution 3: When a first UE initiates a direct link establishment request to a second UE, a first identifier of the first UE is carried, so that the second UE can send the first identifier of the first UE to a third network side device (for example, an AMF or an SMF), and the third network side device obtains a second identifier of the first UE based on the first identifier of the first UE.

It should be noted that the network function described in the embodiments of this application may be understood as a network side device such as a network function entity, a network element, or a gateway.

It should be noted that the message initiated by the first UE to the first network side device via the second UE may be an IMS invite (Invite) message, and the IMS Invite message is used to establish an IMS session (session). For ease of description, in this application, an IMS registration message is used as an example for description, and the IMS registration message may also be replaced with an IMS invite message.

An embodiment of this application provides a communication method. FIG. 2 is a flowchart of a communication method according to an embodiment of this application. As shown in FIG. 2, the communication method provided in this embodiment of this application may include the following steps 201 to 203.

Step 201: A first UE sends an IMS registration message to a first network side device via a second UE.

In this embodiment of this application, the IMS registration message includes first information.

Step 202: The first network side device receives the IMS registration message, and sends a response message to the first UE via the second UE.

Step 203: The first UE receives, via the second UE, the response message sent by the first network side device, to complete an IMS registration process.

In this embodiment of this application, the first information includes at least one of the following:
information used to indicate that the first UE is a remote UE;
information used to indicate that the first UE sends a message via a relay UE;
information used to indicate that the first UE has not performed network registration;
information used to indicate that the first UE has not established an emergency PDU session;
IP address information of the first UE; and
a PLMN identifier of the first UE.

Optionally, in this embodiment of this application, the first network side device may be a P-CSCF.

Optionally, in this embodiment of this application, in a case that a PLMN identifier of the second UE is different from the PLMN identifier of the first UE, the first UE includes the first information in the IMS registration message.

Optionally, in this embodiment of this application, the IMS registration message may be an IMS emergency registration message.

It should be noted that, in this embodiment of this application, the PLMN identifier of the second UE may be understood as a PLMN that serves the second UE, or a PLMN with which the second UE registers, or a PLMN on which the second UE camps.

Optionally, in this embodiment of this application, the first UE may send an additional parameters announcement (additional parameters announcement) message to the second UE, to obtain the PLMN identifier of the second UE.

It should be noted that, in this embodiment of this application, the PLMN identifier of the first UE may be understood as an identifier of a home PLMN of the first UE.

Optionally, in this embodiment of this application, the information used to indicate that the first UE is a remote UE may be an access type (access type), where a value of the access type includes any one of the following:
the 3rd generation partnership project-new radio-proximity service-layer 3 user equipment to network relay (The 3rd Generation Partnership Project-New Radio-Proximity Service-Layer 3 UE to Network Relay, 3GPP-NR-ProSe-L3UNR); and
the 3rd generation partnership project-evolved universal terrestrial radio access network-proximity service-user equipment to network relay (The 3rd Generation Partnership Project-Evolved Universal Terrestrial Radio Access Network-Proximity Service-UE to Network Relay, 3GPP-E-UTRAN-ProSe-UNR).

For example, access type=3GPP-NR-ProSe-L3UNR; access type "3GPP-NR-ProSe-L3UNR"; access type=3GPP-E-UTRAN-ProSe-UNR; or access type "3GPP-E-UTRAN-ProSe-UNR". When the value of the access type included in the IMS message by the first UE is any one of the foregoing cases, the first UE may be considered as a remote UE.

It should be noted that the access type sent by the first UE may be included in an access network information (P-Access-Network-Info) header of the IMS message.

Optionally, in this embodiment of this application, the information used to indicate that the first UE sends a message via a relay UE may also be an access type, where a value of the access type includes any one of the following: 3GPP-NR-ProSe-L3UNR; and 3GPP-E-UTRAN-ProSe-UNR.

Optionally, in this embodiment of this application, the first information may also directly include an access type. In this case, the first information includes at least one of the following:
information used to indicate that the first UE is a remote UE;
information used to indicate that the first UE sends a message via a relay UE;
information used to indicate that the first UE has not performed network registration;
information used to indicate that the first UE has not established an emergency PDU session;
IP address information of the first UE;
a PLMN identifier of the first UE; and
an access type, where a value of the access type includes any one of the following: 3GPP-NR-ProSe-L3UNR; and 3GPP-E-UTRAN-ProSe-UNR.

It should be noted that in a 5G communication system, when the first UE sends the IMS message via the second UE, the value of the carried access type is 3GPP-NR-ProSe-L3UNR; in a 4G communication system, when the first UE sends the IMS message via the second UE, the value of the carried access type is 3GPP-E-UTRAN-ProSe-UNR; or similarly, in a 6G communication system, when the first UE sends the IMS message via the second UE, the value of the carried access type may be 3GPP-6G-ProSe-L3UNR, where 6G may be replaced with an actual name in the 6G communication system. For example, when the name of 6G is FR, the value of the access type may be 3GPP-FR-ProSe-L3UNR. When the 6G communication system is considered, "the value of the access type includes any one of the following: 3GPP-NR-ProSe-L3UNR; and 3GPP-E-UTRAN-ProSe-UNR" may be replaced with: "the value of access type includes any one of the following: 3GPP-NR-ProSe-L3UNR; 3GPP-E-UTRAN-ProSe-UNR; and 3 GPP-6G-ProSe-L3UNR" .

This embodiment of this application provides a communication method. A first UE may send an IMS registration message to a first network side device via a second UE, to carry first information, so that the first network side device executes, based on the first information, a related operation of obtaining identifier information of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

The communication method provided in the embodiments of this application may be alternatively executed by a communication apparatus. In the embodiments of this application, an example in which the communication method is executed by a first UE and a first network side device is used to describe the communication apparatus provided in the embodiments of this application.

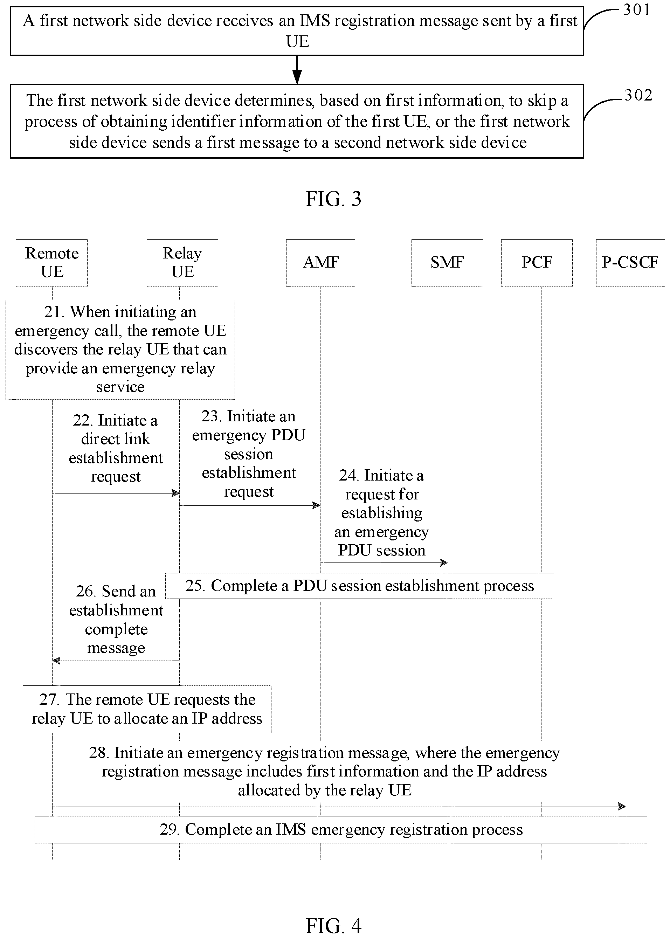

An embodiment of this application provides a communication method. FIG. 3 is a flowchart of a communication method according to an embodiment of this application. As shown in FIG. 3, the communication method provided in this embodiment of this application may include the following step 301 and step 302.

Step 301: A first network side device receives an IMS registration message sent by a first UE.

In this embodiment of this application, the IMS registration message includes first information.

In this embodiment of this application, the first information includes at least one of the following:
information used to indicate that the first UE is a remote UE;
information used to indicate that the first UE sends a message via a relay UE;
information used to indicate that the first UE has not performed network registration;
information used to indicate that the first UE has not established an emergency PDU session;
IP address information of the first UE; and
a PLMN identifier of the first UE.

Step 302: The first network side device determines, based on the first information, to skip a process of obtaining identifier information of the first UE, or the first network side device sends a first message to a second network side device.

In this embodiment of this application, the first message is used to request the identifier information of the first UE, the first message includes the first information, and the first information is used by the second network side device to obtain the identifier information of the first UE.

In this embodiment of this application, not executing the process of obtaining the identifier information of the first UE may be understood as not sending, to the second network side device, a message used to request the identifier information of the first UE.

Optionally, in this embodiment of this application, in a case that the first network side device determines, based on the first information, to skip the process of obtaining the identifier information of the first UE, the first information includes at least one of the following:
information used to indicate that the first UE is a remote UE;
information used to indicate that the first UE sends a message via a relay UE;
information used to indicate that the first UE has not performed network registration; and
information used to indicate that the first UE has not established an emergency PDU session.

It should be noted that, that the first network side device does not execute the process of obtaining the identifier information of the first UE may be understood as: the first network side device does not request the identifier information of the first UE from the second network side device; or the first network side device skips (skip) or ignores (ignore) the process of requesting the identifier information of the first UE from the second network side device; or the first network side device skips or ignores the process of obtaining the identifier information of the first UE; or the first network side device does not execute a process of verifying (verify) the identifier information of the first UE; or the first network side device skips or ignores a process of verifying the identifier information of the first UE. Optionally, in this embodiment of this application, the information used to indicate that the first UE is a remote UE may be an access type, where a value of the access type includes any one of the following:
3GPP-NR-ProSe-L3UNR; and 3GPP-E-UTRAN-ProSe-UNR.

For example, access type=3GPP-NR-ProSe-L3UNR; access type "3GPP-NR-ProSe-L3UNR"; access type=3GPP-E-UTRAN-ProSe-UNR; or access type "3GPP-E-UTRAN-ProSe-UNR". When the value of the access type included in the IMS message by the first UE is any one of the foregoing cases, the first UE may be considered as a remote UE.

It should be noted that the access type sent by the first UE may be included in an access network information (P-Access-Network-Info) header of the IMS message.

Optionally, in this embodiment of this application, the information used to indicate that the first UE sends a message via a relay UE may also be an access type, where a value of the access type includes any one of the following: 3GPP-NR-ProSe-L3UNR; and 3GPP-E-UTRAN-ProSe-UNR.

Optionally, in this embodiment of this application, the first information may also directly include an access type. In this case, the first information includes at least one of the following:
information used to indicate that the first UE is a remote UE;
information used to indicate that the first UE sends a message via a relay UE;
information used to indicate that the first UE does not perform network registration;
information used to indicate that the first UE has not established an emergency PDU session; and
an access type, where a value of the access type includes any one of the following: 3GPP-NR-ProSe-L3UNR; and 3GPP-E-UTRAN-ProSe-UNR.

Optionally, in this embodiment of this application, when the IMS registration message received by the first network side device from the first UE does not include the first information and the first network side device determines that the first network side device does not have an IMS network-to-network interface (Network to Network Interface, NNI) with a home PLMN (home PLMN, HPLMN) of the first UE, the first network side device executes the process of obtaining the identifier information of the first UE. That the first network side device executes the process of obtaining the identifier information of the first UE may be understood as: the first network side device sends, to the second network side device, a message (for example, which may be referred to as a third message) used to request the identifier information of the first UE.

Optionally, if the solution provided in this embodiment of this application may be applicable only to a 5G communication system, that the IMS registration message received by the first network side device from the first UE does not include the first information may be understood as: the value of the access type in the IMS registration message received by the first network side device from the first UE does not include 3GPP-NR-ProSe-L3UNR; or if the solution provided in this embodiment of this application may be applicable only to a 4G communication system, that the IMS registration message received by the first network side device from the first UE does not include the first information may be understood as: the value of the access type in the IMS registration message received by the first network side device from the first UE does not include 3GPP-E-UTRAN-ProSe-UNR; or if the solution provided in this embodiment of this application may be applicable to both a 4G communication system and a 5G system, that the IMS registration message received by the first network side device from the first UE does not include the first information may be understood as: the value of the access type in the IMS registration message received by the first network side device from the first UE does not include any one of the following: 3GPP-NR-ProSe-L3UNR; and 3GPP-E-UTRAN-ProSe-UNR.

Optionally, in this embodiment of this application, the second network side device may be a PCF.

Optionally, in this embodiment of this application, in a case that the first network side device sends the first message to the second network side device, the first information includes at least one of the following:
IP address information of the first UE; and
a PLMN identifier of the first UE.

Optionally, the IP address information of the first UE may be an IP address obtained by directly connecting the first UE to a 5G or 4G network. For example, if the first UE is directly connected to the 5G network, the IP address information is an IP address corresponding to an established PDU session.

Optionally, in this embodiment of this application, the IMS registration message further includes second information, and the second information includes at least one of the following:
information used to indicate that the first UE is a remote UE;
identity information of the first UE; and
port number information of the first UE.

Optionally, the communication method provided in this embodiment of this application further includes the following step 303.

Step 303: The first network side device receives the identifier information of the first UE sent by the second network side device.

In this embodiment of this application, the identifier information of the first UE is obtained by the second network side device based on the first information.

This embodiment of this application provides a communication method. A first network side device may receive an IMS registration message that is sent by a first UE and that carries first information, to determine, based on the first information, to skip a process of obtaining identifier information of the first UE, or request identifier information of the first UE from a second network side device, to complete an IMS registration process. This can avoid a problem that an error in a subsequent IMS procedure is caused and consequently a remote UE cannot initiate an emergency service because the first network side device cannot obtain identifier information of the remote UE. Therefore, the first UE executes an emergency service via the second UE.

An embodiment of this application provides a communication method. The communication method may include the following step 4001.

Step 4001: A first network side device sends a third message to a second network side device when an IMS registration message received from a first UE does not include first information and it is determined that the first network side device does not have an IMS network-to-network interface NNI with an HPLMN of the first UE, where the third message is used to request identifier information of the first UE.

Optionally, in this embodiment of this application, that the IMS registration message does not include the first information includes: a value of an access type in the IMS registration message does not include 3GPP-NR-ProSe-L3UNR or 3GPP-E-UTRAN-ProSe-UNR.

Optionally, in this embodiment of this application, the first information includes at least one of the following:
information used to indicate that the first UE is a remote UE;
information used to indicate that the first UE sends a message via a relay UE;
information used to indicate that the first UE has not performed network registration; and
information used to indicate that the first UE has not established an emergency PDU session.

Optionally, in this embodiment of this application, the first network side device is a P-CSCE.

Optionally, in this embodiment of this application, the second network side device is a PCF.

For related details of this embodiment, refer to the foregoing embodiment. Details are not described herein again.

The communication method provided in the embodiments of this application may be alternatively executed by a communication apparatus. In the embodiments of this application, an example in which the communication method is executed by a first network side device is used to describe the communication apparatus provided in the embodiments of this application.

The following illustrates implementation processes of the foregoing step 201 to step 203, and step 301 and step 302 by using specific implementations (the following implementation 1 and implementation 2).

Implementation 1: As shown in FIG. 4, the communication method provided in this embodiment of this application includes the following steps 21 to 29.

Step 21: When initiating an emergency call, a remote UE discovers a relay UE that can provide an emergency relay (emergency relay) service.

Optionally, in this embodiment of this application, the remote UE (the foregoing first UE) may discover the relay UE (the foregoing second UE) by using an emergency RSC broadcast by the relay UE.

It should be noted that the remote UE selects the relay UE when there is no network coverage or a network that serves the remote UE does not support an emergency service, and initiates an emergency service via the relay UE.

Step 22: The remote UE initiates a direct link establishment request to the relay UE.

It may be understood that the remote UE may select one relay UE, and initiate, to the relay UE, a request (a direct link establishment request) for establishing a PC5 connection, where the direct link establishment request includes an emergency RSC.

It should be noted that a PC5 interface is a direct interface between UEs.

Step 23: The relay UE initiates an emergency PDU session establishment request to an AMF.

It may be understood that the relay UE may obtain, based on the emergency RSC, a parameter corresponding to an emergency PDU session, and initiate the emergency PDU session establishment request.

Step 24: The AMF initiates, an SMF, a request for establishing an emergency PDU session.

The request is Nsmf_PDUSession_CreateSMContextRequest.

Step 25: Complete a PDU session establishment process.

Step 26: The relay UE sends an establishment complete message (a direct link establishment response message) to the remote UE after the emergency PDU session is established.

Step 27: The remote UE requests the relay UE to allocate an IP address.

Step 28: The remote UE initiates an emergency registration (emergency registration) message (an IMS emergency registration message) to a P-CSCF via the relay UE, where the emergency registration message includes first information and the IP address allocated by the relay UE.

In this embodiment of this application, the first information includes at least one of the following:
information used to indicate that the UE that initiates the emergency registration message is a remote UE;
information used to indicate that the remote UE sends the emergency registration message via the relay UE;
information used to indicate that the remote UE has not performed network registration; and
information used to indicate that the remote UE has not established an emergency PDU session.

Optionally, in this embodiment of this application, the information used to indicate that the UE that initiates the emergency registration message is the remote UE may be an access type, where a value of the access type includes any one of the following:
3GPP-NR-ProSe-L3UNR; and 3GPP-E-UTRAN-ProSe-UNR.

For example, access type=3GPP-NR-ProSe-L3UNR; access type "3GPP-NR-ProSe-L3UNR"; access type=3GPP-E-UTRAN-ProSe-UNR; or access type "3GPP-E-UTRAN-ProSe-UNR". When the value of the access type included in the IMS message by the first UE is any one of the foregoing cases, the first UE may be considered as a remote UE.

Optionally, in this embodiment of this application, the information used to indicate that the UE that initiates the emergency registration message sends the emergency registration message via the relay UE may also be an access type, where a value of the access type includes any one of the following: 3GPP-NR-ProSe-L3UNR; and 3GPP-E-UTRAN-ProSe-UNR.

Optionally, in this embodiment of this application, the first information may also directly include an access type. In this case, the first information includes at least one of the following:
information used to indicate that the first UE is a remote UE;
information used to indicate that the first UE sends a message via a relay UE;
information used to indicate that the first UE has not performed network registration;
information used to indicate that the first UE has not established an emergency PDU session; and
an access type, where a value of the access type includes any one of the following: 3GPP-NR-ProSe-L3UNR; and 3GPP-E-UTRAN-ProSe-UNR.

In this embodiment of this application, the P-CSCF may determine, based on the first information, to skip a process of obtaining identifier information of the remote UE from a PCF.

It should be noted that in a scenario in which the remote UE executes an emergency service via the relay UE, the remote UE may not have performed network registration (for example, 4G or 5G), and/or may not have established an emergency session.

It should be noted that in this embodiment of this application, the IP address allocated by the relay UE may be understood as an IP address allocated by the relay UE to the remote UE, and the IP address may be an IP address corresponding to an emergency PDU session of the relay UE.

Step 29: Complete an IMS emergency registration process.

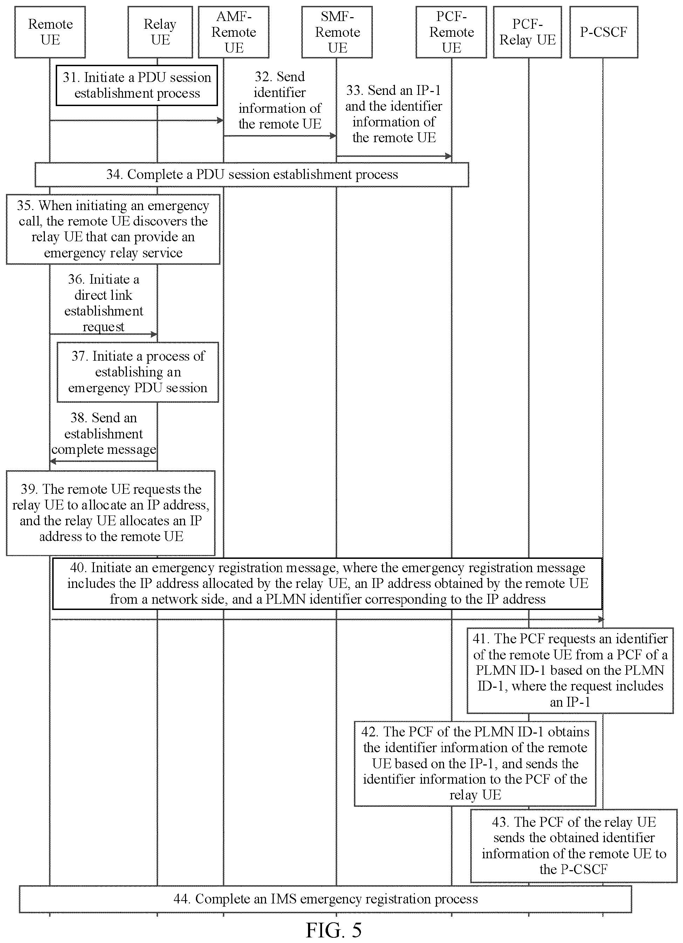

Implementation 2: As shown in FIG. 5, the communication method provided in this embodiment of this application includes the following steps 31 to 44.

Step 31: A remote UE initiates a PDU session establishment process.

It may be understood that before selecting a relay UE, the remote UE may first initiate the PDU session establishment process.

It should be noted that the remote UE accesses a network by itself, and completes PDU session establishment. In this case, the remote UE may be located in a home network or a visited network.

Step 32: An AMF that serves the remote UE (represented as an AMF-Remote UE in the figure) sends identifier information of the remote UE to an SMF that serves the remote UE (represented as an SMF-Remote UE in the figure).

It may be understood that the AMF may obtain the identifier information of the remote UE from the remote UE and a UDM, and the AMF selects the SMF, and sends the identifier information of the remote UE to the SMF.

Optionally, in this embodiment of this application, the identifier information of the remote UE may include at least one of the following: a SUPI, a PEI, and a GPSI.

Optionally, in this embodiment of this application, the AMF may send the identifier information of the remote UE to the SMF by using Nsmf_PDUSession_CreateSMContextRequest.

It should be noted that, in this embodiment of this application, the SUPI may be understood as an international mobile subscriber identity (International Mobile Subscriber Identity, IMSI). The PEI may be understood as an international mobile equipment identity (International Mobile Equipment Identity, IMEI). The GPSI may be understood as a mobile subscriber international ISDN number (Mobile Subscriber International ISDN number, MSISDN).

Step 33: The SMF sends an IP-1 and the identifier information of the remote UE to a PCF that serves the remote UE (represented as a PCF-Remote UE in the figure).

It should be noted that the foregoing IP-1 is an IP address corresponding to a PDU session.

Step 34: Complete a PDU session establishment process.

The SMF may send the IP-1 to the remote UE, and the remote UE records a PLMN identifier (for example, a PLMN ID-1) that serves the remote UE.

Step 35: When initiating an emergency call, the remote UE discovers the relay UE that can provide an emergency relay service.

Step 36: The remote UE initiates a direct link establishment request to the relay UE.

It should be noted that for specific descriptions of step 35 and step 36, refer to the descriptions of step 21 and step 22 in the foregoing embodiment. Details are not described herein again.

Step 37: The relay UE initiates a process of establishing an emergency PDU session.

Step 38: The relay UE sends an establishment complete message to the remote UE after the emergency PDU session is established.

Step 39: The remote UE requests the relay UE to allocate an IP address, and the relay UE allocates an IP address (for example, an IP-2) to the remote UE.

Step 40: The remote UE initiates an emergency registration message (an IMS emergency registration message) to a P-CSCF via the relay UE, where the emergency registration message includes the IP address allocated by the relay UE, an IP address (IP-1) obtained by the remote UE from a network side, and a PLMN identifier (PLMN ID-1) corresponding to the IP address (the IP-1).

Optionally, in this embodiment of this application, the emergency registration message further includes information used to indicate that the UE that initiates the emergency registration message is a remote UE.

Optionally, in this embodiment of this application, in a case that a PLMN identifier of the relay UE is different from the PLMN ID-1, the remote UE may carry the foregoing information by using the emergency registration message.

It should be noted that the remote UE obtains the PLMN identifier of the relay UE by sending an additional parameters announcement (additional parameters announcement) message to the relay UE.

Optionally, in this embodiment of this application, the P-CSCF determines a home PLMN of the remote UE based on identity information sent by the remote UE. When the P-CSCF determines that there is no interface with the home PLMN of the remote UE, the P-CSCF may request the identifier information of the remote UE from the PCF, where the request includes the IP-1 and the PLMN ID-1.

Optionally, in this embodiment of this application, the P-CSCF may send the IP-1 and the PLMN ID-1 to the PCF based on an indication of the remote UE.

Optionally, in this embodiment of this application, the identity information sent by the remote UE may be an IMS private identity (IMS Private Identity, IMPI) or an IMS public identity (IMS Public Identity, IMPU).

Step 41: The PCF requests an identifier of the remote UE from the PCF of the PLMN ID-1 based on the PLMN ID-1, where the request includes the IP-1.

Step 42: The PCF of the PLMN ID-1 obtains the identifier information of the remote UE based on the IP-1, and sends the identifier information to the PCF of the relay UE.

It should be noted that the PCF of the relay UE may be understood as a PCF that serves the relay UE (represented as a PCF-Relay UE in the following embodiment).

Step 43: The PCF of the relay UE sends the obtained identifier information of the remote UE to the P-CSCF.

Step 44: Complete an IMS emergency registration process.

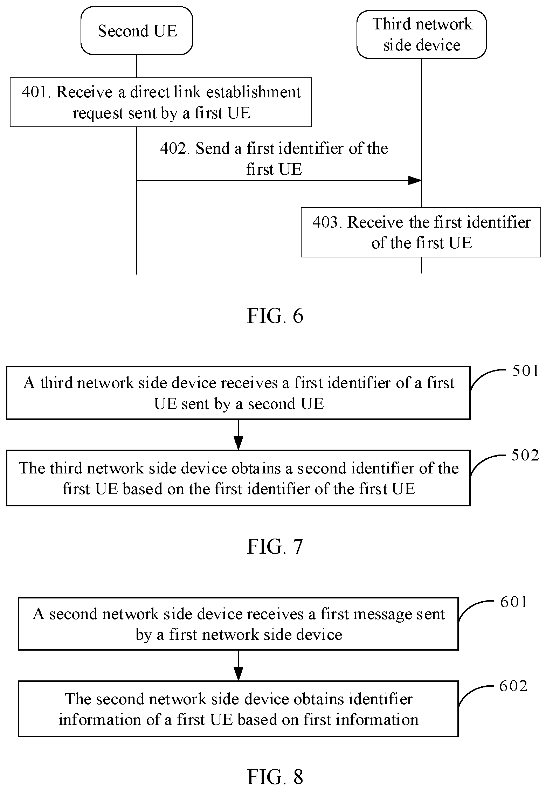

An embodiment of this application provides a communication method. FIG. 6 is a flowchart of a communication method according to an embodiment of this application. As shown in FIG. 6, the communication method provided in this embodiment of this application may include the following steps 401 to 403.

Step 401: A second UE receives a direct link establishment request sent by a first UE.

In this embodiment of this application, the direct link establishment request includes a first identifier of the first UE.

Optionally, in this embodiment of this application, the first identifier of the first UE includes a globally unique temporary user equipment identity (Globally Unique Temporary UE Identity, GUTI) or a subscription concealed identifier (Subscription Concealed Identifier, SUCI) of the first UE.

Step 402: The second UE sends the first identifier of the first UE to a third network side device.

Step 403: The third network side device receives the first identifier of the first UE sent by the second UE.

In this embodiment of this application, the first identifier of the first UE is used by the third network side device to obtain a second identifier of the first UE.

Optionally, in this embodiment of this application, the third network side device may be an AMF or an SMF.

Optionally, in this embodiment of this application, the second identifier of the first UE includes at least one of the following: a subscription permanent identifier (Subscription Permanent Identifier, SUPI), a permanent equipment identifier (Permanent Equipment Identifier, PEI), and a generic public subscription identifier (Generic Public Subscription Identifier, GPSI).

Optionally, in this embodiment of this application, the foregoing step 402 may be specifically implemented by the following step 402a.

Step 402a: The second UE sends the first identifier of the first UE to the third network side device by using a non-access stratum (Non-access stratum, NAS) message.

Optionally, in this embodiment of this application, in a case that the first identifier of the first UE is sent via the NAS message, the third network side device is an AMF.

Optionally, in this embodiment of this application, the foregoing step 402 may be specifically implemented by the following step 402b.

Step 402b: The second UE sends the first identifier of the first UE to the third network side device by using a remote UE report (Remote UE Report) message.

Optionally, in this embodiment of this application, in a case that the first identifier of the first UE is sent via the remote UE report message, the third network side device is an SMF.

This embodiment of this application provides a communication method. A second UE may receive a direct link establishment request sent by a first UE, where the request carries a first identifier of the first UE, and a second UE may send the first identifier of the first UE to a third network side device, so that the third network side device obtains a second identifier of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

The communication method provided in the embodiments of this application may be alternatively executed by a communication apparatus. In the embodiments of this application, an example in which the communication method is executed by a second UE and a third network side device is used to describe the communication apparatus provided in the embodiments of this application.

An embodiment of this application provides a communication method. FIG. 7 is a flowchart of a communication method according to an embodiment of this application. As shown in FIG. 7, the communication method provided in this embodiment of this application may include the following step 501 and step 502.

Step 501: A third network side device receives a first identifier of a first UE sent by a second UE.

Optionally, in this embodiment of this application, the first identifier of the first UE includes a GUTI or an SUCI of the first UE.

Optionally, in this embodiment of this application, the foregoing step 501 may be specifically implemented by the following step 501a.

Step 501a: The third network side device receives a NAS message sent by the second UE, where the NAS message includes the first identifier of the first UE.

Optionally, in this embodiment of this application, the NAS message further includes identity information of the first UE.

Optionally, in this embodiment of this application, the foregoing step 501 may be specifically implemented by the following step 501b.

Step 501b: The third network side device receives a remote UE report message sent by the second UE, where the remote UE report message includes the first identifier of the first UE.

Step 502: The third network side device obtains a second identifier of the first UE based on the first identifier of the first UE.

Optionally, in this embodiment of this application, the foregoing step 502 may be specifically implemented by the following step 503 and step 504.

Step 503: The third network side device sends a request message to a fourth network side device, where the request message includes the first identifier of the first UE.

In this embodiment of this application, the first identifier of the first UE is used to request the second identifier of the first UE.

In this embodiment of this application, the first identifier of the first UE is used by the fourth network side device to send a second message to a fifth network side device that serves the first UE, the second message is used to request the second identifier of the first UE, and the second message includes the first identifier of the first UE.

Optionally, in this embodiment of this application, the fourth network side device may be an AMF of the second UE, that is, an AMF that serves the second UE.

Step 504: The third network side device receives the second identifier of the first UE obtained by the fourth network side device from a fifth network side device that serves the first UE.

Optionally, in this embodiment of this application, the fifth network side device may be an AMF of the first UE, that is, an AMF that serves the first UE.

In this embodiment of this application, the third network side device (for example, an SMF) may send a request message to the AMF of the second UE, where the request message carries the first identifier (for example, a GUTI) of the first UE; the AMF of the second UE obtains, based on the first identifier of the first UE, an address of the AMF that serves the first UE, and requests the second identifier/identifier information of the first UE from the AMF, where the request includes the first identifier of the first UE; and the AMF of the first UE provides the second identifier of the first UE for the AMF of the second UE, and the AMF of the second UE sends the second identifier of the first UE to the third network side device.

Optionally, in this embodiment of this application, the second identifier of the first UE includes at least one of the following: a SUPI, a PEI, and a GPSI.

Optionally, in this embodiment of this application, the foregoing step 502 may be specifically implemented by the following step 502a and step 502b.

Step 502a: The third network side device sends an authentication request to a home authentication server function (Authentication Server Function, AUSF) and/or a home UDM of the first UE based on the first identifier of the first UE.

In this embodiment of this application, the authentication request includes the first identifier of the first UE.

Step 502b: The third network side device receives a SUPI that is corresponding to the first identifier of the first UE and that is obtained by the AUSF and/or the UDM based on the first identifier of the first UE.

Optionally, the communication method provided in this embodiment of this application further includes the following step 505.

Step 505: The third network side device sends the second identifier of the first UE to a second network side device.

This embodiment of this application provides a communication method. A third network side device may receive a first identifier of a first UE sent by a second UE, and obtain a second identifier of the first UE based on the first identifier of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

The communication method provided in the embodiments of this application may be alternatively executed by a communication apparatus. In the embodiments of this application, an example in which the communication method is executed by a third network side device is used to describe the communication apparatus provided in the embodiments of this application.

An embodiment of this application provides a communication method. FIG. 8 is a flowchart of a communication method according to an embodiment of this application. As shown in FIG. 8, the communication method provided in this embodiment of this application may include the following step 601 and step 602.

Step 601: A second network side device receives a first message sent by a first network side device.

In this embodiment of this application, the first message is used to request identifier information of the first UE, and the first message includes first information.

Step 602: The second network side device obtains the identifier information of the first UE based on the first information.

Optionally, in this embodiment of this application, the first information includes at least one of the following:
IP address information of the first UE; and
a PLMN identifier of the first UE.

Optionally, in this embodiment of this application, the first message further includes identity information of the first UE, and the identity information of the first UE is used by the second network side device to obtain the identifier information of the first UE.

Optionally, in this embodiment of this application, the first message further includes a port number of the first UE, and the port number of the first UE is used by the second network side device to obtain the identifier information of the first UE.

Optionally, the communication method provided in this embodiment of this application further includes the following step 603.

Step 603: The second network side device receives third information sent by a third network side device, where the third information is used by the second network side device to obtain the identifier information of the first UE.

In this embodiment of this application, the third information includes at least one of the following: identity information of the first UE, IP address information of the first UE, and IP address information and a port number of the first UE.

This embodiment of this application provides a communication method. A second network side device may receive a first message that is sent by a first network side device and that carries first information, and obtain identifier information of a first UE based on the first information, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

The communication method provided in the embodiments of this application may be alternatively executed by a communication apparatus. In the embodiments of this application, an example in which the communication method is executed by a second network side device is used to describe the communication apparatus provided in the embodiments of this application.

The following illustrates implementation processes of the foregoing step 401 to step 403 and solutions thereof, step 501 and step 502 and solutions thereof, and step 601 and step 602 and solutions thereof by using specific implementations (the following implementation 3 to implementation 6).

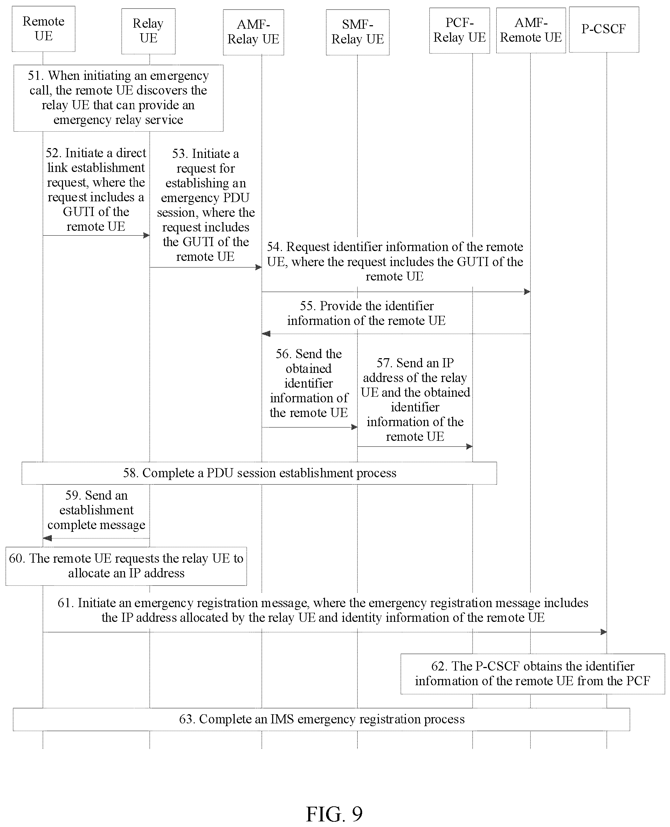

Implementation 3: When a remote UE initiates a request to a relay UE, a GUTI of the remote UE is carried. The relay UE sends the GUTI of the remote UE to an AMF, and the AMF obtains identifier information of the remote UE based on the GUTI of the remote UE. As shown in FIG. 9, the communication method provided in this embodiment of this application includes the following steps 51 to 63.

Step 51: When initiating an emergency call, a remote UE discovers a relay UE that can provide an emergency relay service.

It should be noted that for specific descriptions of step 51, refer to the descriptions of step 21 in the foregoing embodiment. Details are not described herein again.

Step 52: The remote UE initiates a direct link establishment request to the relay UE, where the request includes a GUTI of the remote UE.

In this embodiment of this application, the remote UE may select one relay UE, and initiate, to the relay UE, a request (a direct link establishment request) for establishing a PC5 connection, where the direct link establishment request includes an emergency RSC and the GUTI of the remote UE.

It should be noted that the GUTI of the remote UE is a temporary identity allocated by a network side to the remote UE when the remote UE registers with the network side alone.

Step 53: The relay UE initiates a request for establishing an emergency PDU session, where the request includes the GUTI of the remote UE.

In this embodiment of this application, the relay UE sends a NAS message to an AMF that serves the relay UE (represented as an AMF-Relay UE in the figure), where the NAS message includes a parameter corresponding to a to-be-established PDU session, and a request type: an emergency PDU session, and is used to indicate to establish an emergency PDU session.

The NAS message includes N1SMcontainer, and N1SMcontainer includes a PDU session establishment request.

The NAS message includes the GUTI of the remote UE.

Optionally, in this embodiment of this application, the NAS message further includes identity information of the remote UE, such as an IMS private identity (IMS Private Identity, IMPI).

Step 54: The AMF of the relay UE requests identifier information of the remote UE from an AMF that serves the remote UE (represented as an AMF-Remote UE in the figure), where the request includes the GUTI of the remote UE.

It may be understood that the AMF of the relay UE may obtain, based on the GUTI, an address of the AMF that serves the remote UE, and request the identifier information of the remote UE from the AMF, where the request includes the GUTI of the remote UE.

It should be noted that the GUTI is a temporary identity allocated to the remote UE by the AMF that serves the remote UE, and the GUTI includes identifier information of the AMF. Another AMF may find the AMF based on the GUTI, and query the AMF for information about the remote UE.

Optionally, in this embodiment of this application, the foregoing request including the GUTI of the remote UE may be Namf_Communication_UEContextTransfer.

Step 55: The AMF-Remote UE provides the identifier information of the remote UE for the AMF-Relay UE.

Optionally, in this embodiment of this application, the AMF-Remote UE may provide the identifier information of the remote UE for the AMF-Relay UE by using Namf_Communication_UEContextTransfer response.

Step 56: The AMF-Relay UE sends the obtained identifier information of the remote UE to an SMF that serves the relay UE (represented as an SMF-Relay UE in the figure).

Optionally, in this embodiment of this application, the AMF-Relay UE may further send the identity information of the remote UE to the SMF-Relay UE.

Optionally, in this embodiment of this application, the AMF-Relay UE may send the identifier information of the remote UE to the SMF-Relay UE by using Nsmf_PDUSession_CreateSMContextRequest.

Step 57: The SMF-Relay UE sends an IP address of the relay UE and the obtained identifier information of the remote UE to a PCF that serves the relay UE (represented as a PCF-Relay UE in the figure).

Optionally, in this embodiment of this application, the SMF-Relay UE may further send the identity information of the remote UE to the PCF-Relay UE.

Step 58: Complete a PDU session establishment process.

The SMF-Relay UE sends an IP address corresponding to an emergency PDU session to the remote UE.

Step 59: The relay UE sends an establishment complete message to the remote UE after the emergency PDU session is established.

Step 60: The remote UE requests the relay UE to allocate an IP address.

Step 61: The remote UE initiates an emergency registration message (an IMS emergency registration message), where the emergency registration message includes the IP address allocated by the relay UE and identity information (for example, an IMPI) of the remote UE.

Step 62: A P-CSCF obtains the identifier information of the remote UE from the PCF.

In this embodiment of this application, the P-CSCF determines a home PLMN of the remote UE based on the identity information sent by the remote UE. When the P-CSCF determines that there is no interface with the home PLMN of the remote UE, the P-CSCF may request the identifier information of the remote UE from the PCF, where the request includes an IP address of the remote UE. The PCF obtains the identifier information of the remote UE, and sends the identifier information to the P-CSCF.

Optionally, in this embodiment of this application, the request further includes the identity information of the remote UE.

Optionally, in this embodiment of this application, the PCF may determine the identifier information of the remote UE based on the identity information of the remote UE.

It should be noted that if the relay UE can support only one remote UE initiating an emergency service at a time, when the remote UE uses the emergency service, the relay UE itself cannot use the emergency service any longer, and therefore the identity information of the remote UE is not required. If the relay UE can support more than one remote UE initiating an emergency service at a time, the identity information of the remote UE is required.

Step 63: Complete an IMS emergency registration process.

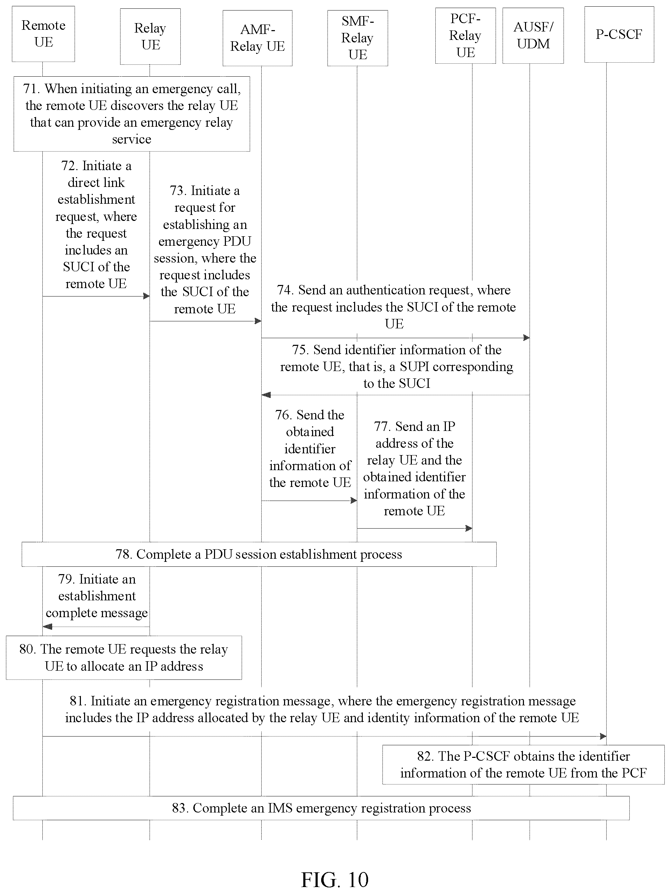

Implementation 4: When a remote UE initiates a request to a relay UE, an SUCI of the remote UE is carried. The relay UE sends the SUCI of the remote UE to an AMF, and the AMF obtains identifier information of the remote UE based on the SUCI of the remote UE. As shown in FIG. 10, the communication method provided in this embodiment of this application includes the following steps 71 to 83.

Step 71: When initiating an emergency call, a remote UE discovers a relay UE that can provide an emergency relay service.

It should be noted that for specific descriptions of step 71, refer to the descriptions of step 21 in the foregoing embodiment. Details are not described herein again.

Step 72: The remote UE initiates a direct link establishment request to the relay UE, where the request includes an SUCI of the remote UE.

In this embodiment of this application, the remote UE may select one relay UE, and initiate, to the relay UE, a request (a direct link establishment request) for establishing a PC5 connection, where the direct link establishment request includes an emergency RSC and the SUCI of the remote UE.

It should be noted that the SUCI of the remote UE is an identity obtained by encrypting a SUPI of the remote UE.

Step 73: The relay UE initiates a request for establishing an emergency PDU session, where the request includes the SUCI of the remote UE.

In this embodiment of this application, the relay UE sends a NAS message to an AMF that serves the relay UE (represented as an AMF-Relay UE in the figure), where the NAS message includes a parameter corresponding to a to-be-established PDU session, and a request type: an emergency PDU session, and is used to indicate to establish an emergency PDU session.

The NAS message includes N1SMcontainer, and N1SMcontainer includes a PDU session establishment request.

The NAS message includes the SUCI of the remote UE.

Optionally, in this embodiment of this application, the NAS message further includes identity information of the remote UE, such as an IMPI.

Step 74: The AMF of the relay UE sends an authentication request to a home AUSF and/or a home UDM of the remote UE, where the request includes the SUCI of the remote UE.

It may be understood that the AMF of the relay UE may obtain the home AUSF and/or the home UDM of the remote UE based on the SUCI, and send the authentication request to the AUSF and/or the UDM.

Step 75: The AUSF and/or the UDM send/sends identifier information of the remote UE to the AMF of the relay UE, that is, a SUPI corresponding to the SUCI.

Optionally, in this embodiment of this application, the AUSF and/or the UDM may authenticate the remote UE by using the AMF of the relay UE.

Step 76 to step 83 are the same as step 56 to step 63. For details, refer to the descriptions of step 56 to step 63 in the foregoing embodiment. Details are not described herein again.

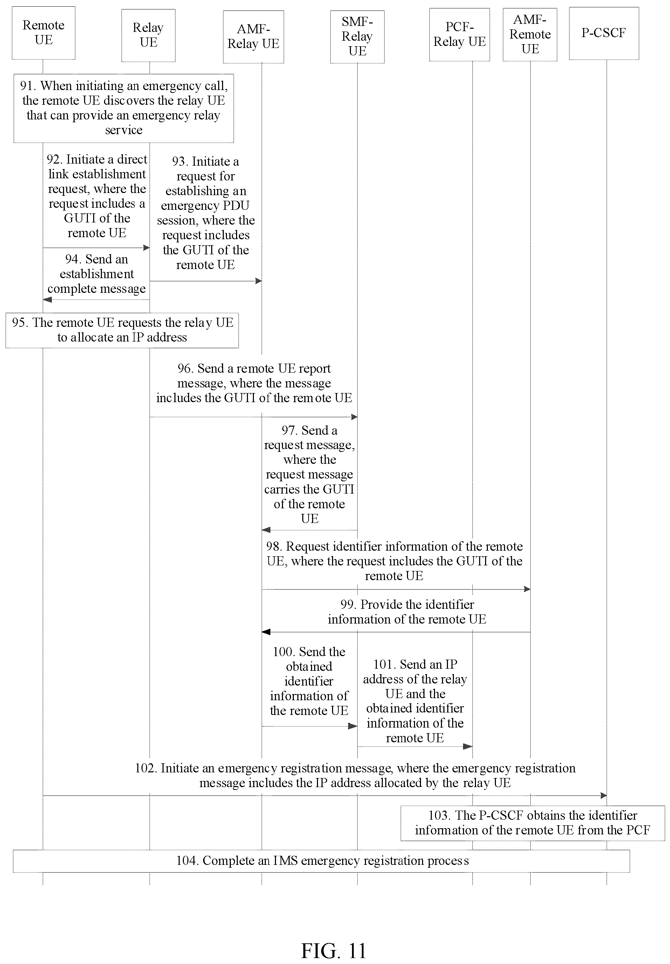

Implementation 5: A relay UE sends a GUTI of a remote UE to an SMF via a remote UE report message, the SMF sends the GUTI of the remote UE to an AMF. After obtaining identifier information of the remote UE based on the GUTI of the remote UE, the AMF sends the identifier information of the remote UE to the SMF, and the SMF sends the identifier information to a PCF. As shown in FIG. 11, the communication method provided in this embodiment of this application includes the following steps 91 to 104.

Step 91: When initiating an emergency call, a remote UE discovers a relay UE that can provide an emergency relay service.

It should be noted that for specific descriptions of step 91, refer to the descriptions of step 21 in the foregoing embodiment. Details are not described herein again.

Step 92: The remote UE initiates a direct link establishment request to the relay UE, where the request includes a GUTI of the remote UE.

In this embodiment of this application, the remote UE may select one relay UE, and initiate, to the relay UE, a request (a direct link establishment request) for establishing a PC5 connection, where the direct link establishment request includes an emergency RSC and the GUTI of the remote UE.

It should be noted that the GUTI of the remote UE is a temporary identity allocated by a network side to the remote UE when the remote UE registers with the network side alone.

Step 93: The relay UE initiates a request for establishing an emergency PDU session, where the request includes the GUTI of the remote UE.

Step 94: The relay UE sends an establishment complete message to the remote UE after the emergency PDU session is established.

Step 95: The remote UE requests the relay UE to allocate an IP address.

Step 96: The relay UE sends a remote UE report message to an SMF of the relay UE, where the message includes the GUTI of the remote UE.

Optionally, in this embodiment of this application, the remote UE report message further includes at least one of the following: identity information of the remote UE, an IP address allocated by the relay UE to the remote UE, and an IP address and a port number allocated by the relay UE to the remote UE.

Optionally, in this embodiment of this application, the identity information of the remote UE may be an SUCI or a PRUK (ProSe Remote User Key) identifier of the remote UE.

Step 97: The SMF of the relay UE sends a request message to an AMF of the relay UE, where the request message carries the GUTI of the remote UE.

Step 98: The AMF of the relay UE requests identifier information of the remote UE from an AMF that serves the remote UE (represented as an AMF-Remote UE in the figure), where the request includes the GUTI of the remote UE.

It may be understood that the AMF of the relay UE may obtain, based on the GUTI, an address of the AMF that serves the remote UE, and request the identifier information of the remote UE from the AMF, where the request includes the GUTI of the remote UE.

It should be noted that the GUTI is a temporary identity allocated to the remote UE by the AMF that serves the remote UE, and the GUTI includes identifier information of the AMF. Another AMF may find the AMF based on the GUTI, and query the AMF for information about the remote UE.

Step 99: The AMF-Remote UE provides the identifier information of the remote UE for the AMF-Relay UE.

Step 100: The AMF-Relay UE sends the obtained identifier information of the remote UE to an SMF that serves the relay UE (represented as an SMF-Relay UE in the figure).

Step 101: The SMF-Relay UE sends an IP address of the relay UE and the obtained identifier information of the remote UE to a PCF that serves the relay UE (represented as a PCF-Relay UE in the figure).

Optionally, in this embodiment of this application, the SMF-Relay UE may further send at least one of the following to the PCF-Relay UE: identity information of the remote UE, an IP address of the remote UE, and an IP address and a port number of the remote UE.

Step 102: The remote UE initiates an emergency registration message (an IMS emergency registration message), where the emergency registration message includes the IP address allocated by the relay UE.

Optionally, in this embodiment of this application, the emergency registration message further includes the identity information of the remote UE or the port number of the remote UE.

Step 103: A P-CSCF obtains the identifier information of the remote UE from the PCF.

In this embodiment of this application, the P-CSCF determines a home PLMN of the remote UE based on the identity information sent by the remote UE. When the P-CSCF determines that there is no interface with the home PLMN of the remote UE, the P-CSCF may request the identifier information of the remote UE from the PCF, where the request includes an IP address of the remote UE. The PCF obtains the identifier information of the remote UE, and sends the identifier information to the P-CSCF.

Optionally, in this embodiment of this application, the request further includes the identity information of the remote UE or the port number of the remote UE.

Optionally, in this embodiment of this application, the PCF may determine the identifier information of the remote UE based on the identity information of the remote UE or the port number of the remote UE.

It should be noted that if the relay UE can support only one remote UE initiating an emergency service at a time, when the remote UE uses the emergency service, the relay UE itself cannot use the emergency service any longer, and therefore the identity information of the remote UE or the port number of the remote UE is not required. If the relay UE can support more than one remote UE initiating an emergency service at a time, the identity information of the remote UE or the port number of the remote UE is required.

Step 104: Complete an IMS emergency registration process.

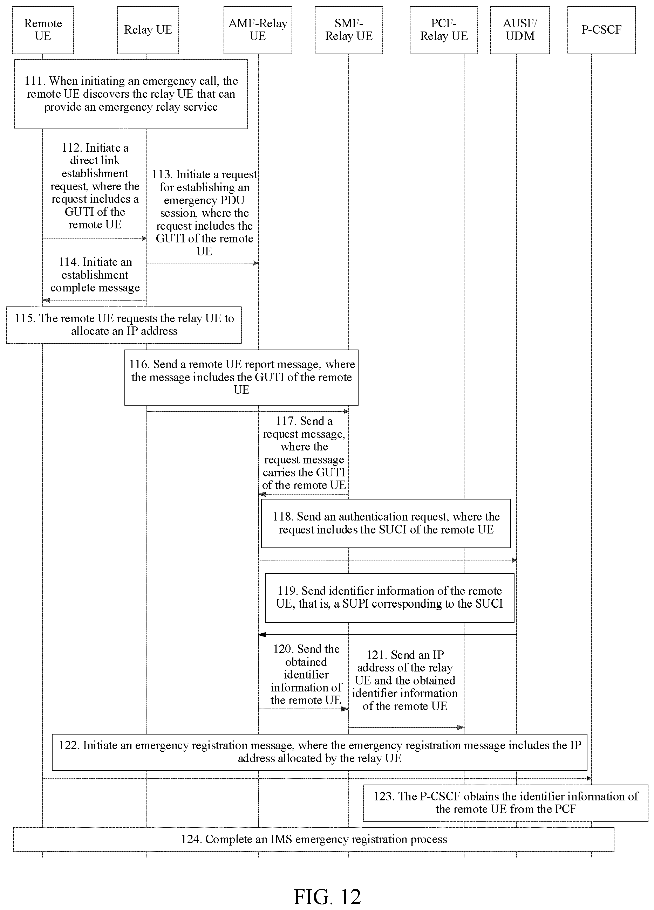

Implementation 6: A relay UE sends an SUCI of a remote UE to an SMF via a remote UE report message, and the SMF sends the SUCI of the remote UE to an AMF. After obtaining identifier information of the remote UE based on the SUCI of the remote UE, the AMF sends the identifier information of the remote UE to the SMF, and the SMF sends the identifier information to a PCF. As shown in FIG. 12, the communication method provided in this embodiment of this application includes the following steps 111 to 124.

Step 111 to step 117 are the same as step 91 to step 97. For details, refer to the descriptions of step 91 to step 97 in the foregoing embodiment. Details are not described herein again.

Step 118 and step 119 are the same as step 74 and step 75. For details, refer to the descriptions of step 74 and step 75 in the foregoing embodiment. Details are not described herein again.

Step 120 and step 124 are the same as step 100 to step 104. For details, refer to the descriptions of step 100 to step 104 in the foregoing embodiment. Details are not described herein again.

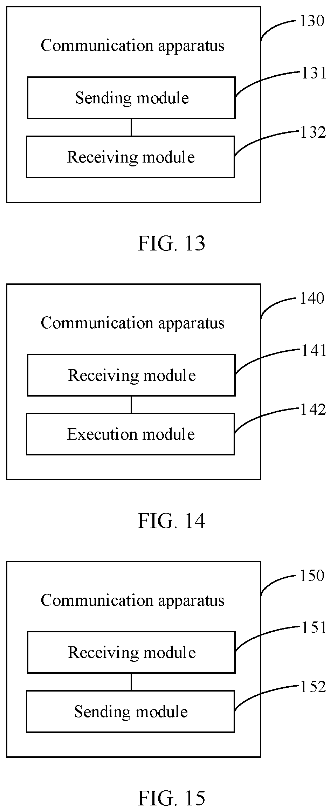

FIG. 13 is a possible schematic structural diagram of a communication apparatus according to an embodiment of this application. The communication apparatus is applied to a first UE. As shown in FIG. 13, a communication apparatus 130 may include a sending module 131 and a receiving module 132.

The sending module 131 is configured to send an IMS registration message to a first network side device via a second UE, where the IMS registration message includes first information. The receiving module 132 is configured to receive, via the second UE, a response message sent by the first network side device, to complete an IMS registration process. The first information includes at least one of the following: information used to indicate that the first UE is a remote UE; information used to indicate that the first UE sends a message via a relay UE; information used to indicate that the first UE has not performed network registration; information used to indicate that the first UE has not established an emergency PDU session; IP address information of the first UE; and a PLMN identifier of the first UE.

This embodiment of this application provides a communication apparatus. The communication apparatus may send an IMS registration message to a first network side device via a second UE, to carry first information, so that the first network side device executes, based on the first information, a related operation of obtaining identifier information of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

In a possible implementation, in a case that a PLMN identifier of the second UE is different from the PLMN identifier of the first UE, the first UE includes the first information in the IMS registration message.

In a possible implementation, the IMS registration message is an IMS emergency registration message.

In a possible implementation, the first network side device is a P-CSCF.

In a possible implementation, the information used to indicate that the first UE is a remote UE includes: an access type, where
a value of the access type includes the following: the 3rd generation partnership project-new radio-proximity service-layer 3 user equipment to network relay 3GPP-NR-ProSe-L3UNR; and the 3rd generation partnership project-evolved universal terrestrial radio access network-proximity service-user equipment to network relay 3GPP-E-UTRAN-ProSe-UNR.

The communication apparatus in this embodiment of this application may be a terminal, for example, a terminal with an operating system, or may be a component in the terminal, for example, an integrated circuit or a chip. The terminal may be user equipment, or may be another terminal device other than the user equipment. For example, the terminal may include but is not limited to the foregoing listed types of the UE 11. The another device may be a server, a network attached storage (Network Attached Storage, NAS), or the like. This is not specifically limited in this embodiment of this application.

The communication apparatus provided in the embodiments of this application can implement the processes implemented by the first UE in the foregoing method embodiment, and achieve a same technical effect. To avoid repetition, details are not described herein again.

FIG. 14 is a possible schematic structural diagram of a communication apparatus according to an embodiment of this application. The communication apparatus is applied to a first network side device. As shown in FIG. 14, a communication apparatus 140 may include a receiving module 141 and an execution module 142.

The receiving module 141 is configured to receive an IMS registration message sent by a first UE, where the IMS registration message includes first information. The execution module 142 is configured to: determine, based on the first information, to skip a process of obtaining identifier information of the first UE; or send a first message to a second network side device, where the first message is used to request identifier information of the first UE, the first message includes the first information, and the first information is used by the second network side device to obtain the identifier information of the first UE.

This embodiment of this application provides a communication apparatus. The communication apparatus may receive an IMS registration message that is sent by a first UE and that carries first information, to determine, based on the first information, to skip a process of obtaining identifier information of the first UE, or request identifier information of the first UE from a second network side device, to complete an IMS registration process. This can avoid a problem that an error in a subsequent IMS procedure is caused and consequently a remote UE cannot initiate an emergency service because the communication apparatus cannot obtain identifier information of the remote UE. Therefore, the first UE executes an emergency service via the second UE.

In a possible implementation, in a case that the first network side device determines, based on the first information, to skip the process of obtaining the identifier information of the first UE,
the first information includes at least one of the following:
information used to indicate that the first UE is a remote UE;
information used to indicate that the first UE sends a message via a relay UE;
information used to indicate that the first UE has not performed network registration; and
information used to indicate that the first UE has not established an emergency PDU session.

In a possible implementation, in a case that the first network side device sends the first message to the second network side device,
the first information includes at least one of the following:
IP address information of the first UE; and
a PLMN identifier of the first UE.

In a possible implementation, the IMS registration message further includes second information, and the second information includes at least one of the following:
information used to indicate that the first UE is a remote UE;
identity information of the first UE; and
port number information of the first UE.

In a possible implementation, the information used to indicate that the first UE is a remote UE includes: an access type, where a value of the access type includes any one of the following: 3GPP-NR-ProSe-L3UNR; and 3GPP-E-UTRAN-ProSe-UNR.

In a possible implementation, the receiving module 141 is further configured to receive the identifier information of the first UE sent by the second network side device.

In a possible implementation, the second network side device is a PCF.

The communication apparatus provided in this embodiment of this application can implement the processes implemented by the first network side device in the foregoing method embodiment, and achieve a same technical effect. To avoid repetition, details are not described herein again.

FIG. 15 is a possible schematic structural diagram of a communication apparatus according to an embodiment of this application. The communication apparatus is applied to a second UE. As shown in FIG. 15, a communication apparatus 150 may include a receiving module 151 and a sending module 152.

The receiving module 151 configured to receive a direct link establishment request sent by a first UE, where the direct link establishment request includes a first identifier of the first UE. The sending module 152 is configured to send the first identifier of the first UE to a third network side device, where the first identifier of the first UE is used to obtain a second identifier of the first UE.

This embodiment of this application provides a communication apparatus. The communication apparatus may receive a direct link establishment request sent by a first UE, where the request carries a first identifier of the first UE, and a second UE may send the first identifier of the first UE to a third network side device, so that the third network side device obtains a second identifier of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

In a possible implementation, the first identifier of the first UE includes a GUTI or an SUCI of the first UE.

In a possible implementation, the second identifier of the first UE includes at least one of the following: a SUPI, a PEI, and a GPSI.

In a possible implementation, the sending module 152 is specifically configured to: send the first identifier of the first UE to the third network side device via a NAS message; or send the first identifier of the first UE to the third network side device via a remote UE report message.

In a possible implementation, in a case that the first identifier of the first UE is sent via the NAS message, the third network side device is an AMF; or in a case that the first identifier of the first UE is sent via the remote UE report message, the third network side device is an SMF.

The communication apparatus in this embodiment of this application may be a terminal, for example, a terminal with an operating system, or may be a component in the terminal, for example, an integrated circuit or a chip. The terminal may be user equipment, or may be another terminal device other than the user equipment. For example, the terminal may include but is not limited to the foregoing listed types of the UE 11. The another device may be a server, a NAS, or the like. This is not specifically limited in this embodiment of this application.

The communication apparatus provided in this embodiment of this application can implement the processes implemented by the second UE in the foregoing method embodiment, and achieve a same technical effect. To avoid repetition, details are not described herein again.

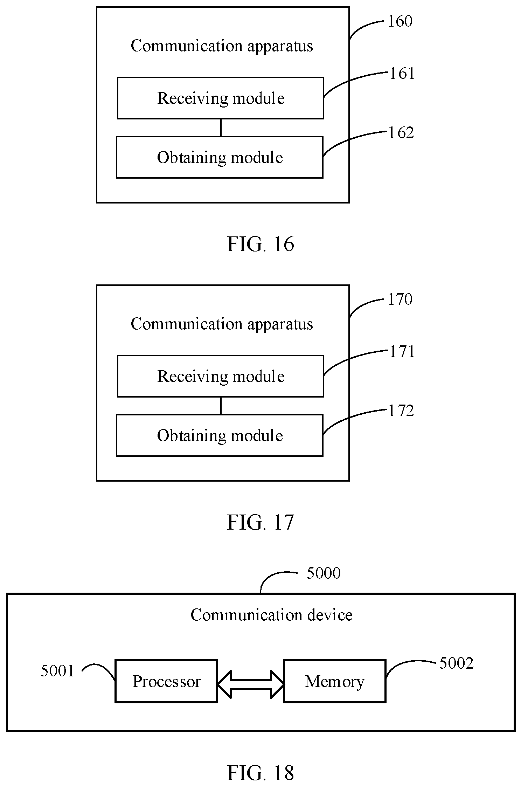

FIG. 16 is a possible schematic structural diagram of a communication apparatus according to an embodiment of this application. The communication apparatus is applied to a third network side device. As shown in FIG. 16, a communication apparatus 160 may include a receiving module 161 and an obtaining module 162.

The receiving module 161 is configured to receive a first identifier of a first UE sent by a second UE. The obtaining module 162 is configured to obtain a second identifier of the first UE based on the first identifier of the first UE.

This embodiment of this application provides a communication apparatus. The communication apparatus may receive a first identifier of a first UE sent by a second UE, and obtain a second identifier of the first UE based on the first identifier of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

In a possible implementation, the receiving module 161 is specifically configured to receive a NAS message sent by the second UE, where the NAS message includes the first identifier of the first UE.

In a possible implementation, the NAS message further includes identity information of the first UE.

In a possible implementation, the receiving module 161 is specifically configured to receive a remote UE report message sent by the second UE, where the remote UE report message includes the first identifier of the first UE.

In a possible implementation, the communication apparatus 160 further includes a sending module. The sending module is configured to send a request message to a fourth network side device, where the request message includes the first identifier of the first UE, and the first identifier of the first UE is used to request the second identifier of the first UE. The third network side device receives the second identifier of the first UE obtained by the fourth network side device from a fifth network side device that serves the first UE.

In a possible implementation, the obtaining module 162 is specifically configured to send an authentication request to a home AUSF and/or a home UDM of the first UE based on the first identifier of the first UE, where the authentication request includes the first identifier of the first UE. The receiving module 161 is further configured to receive a SUPI that is corresponding to the first identifier of the first UE and that is obtained by the AUSF and/or the UDM based on the first identifier of the first UE.

In a possible implementation, the communication apparatus 160 further includes a sending module. The sending module is configured to send the second identifier of the first UE to a second network side device.

The communication apparatus provided in this embodiment of this application can implement the processes implemented by the third network side device in the foregoing method embodiment, and achieve a same technical effect. To avoid repetition, details are not described herein again.

FIG. 17 is a possible schematic structural diagram of a communication apparatus according to an embodiment of this application. The communication apparatus is applied to a second network side device. As shown in FIG. 17, a communication apparatus 170 may include a receiving module 171 and an obtaining module 172.

The receiving module 171 is configured to receive a first message sent by a first network side device, where the first message is used to request identifier information of a first UE, and the first message includes first information. The obtaining module 172 is configured to obtain the identifier information of the first UE based on the first information.

This embodiment of this application provides a communication apparatus. The communication apparatus may receive a first message that is sent by a first network side device and that carries first information, and obtain identifier information of a first UE based on the first information, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

In a possible implementation, the first information includes at least one of the following:
IP address information of the first UE; and
a PLMN identifier of the first UE.

In a possible implementation, the first message further includes identity information of the first UE, and the identity information of the first UE is used by the second network side device to obtain the identifier information of the first UE.

In a possible implementation, the first message further includes a port number of the first UE, and the port number of the first UE is used by the second network side device to obtain the identifier information of the first UE.

In a possible implementation, the receiving module 171 is further configured to receive third information sent by a third network side device, where the third information is used by the second network side device to obtain the identifier information of the first UE. The third information includes at least one of the following: identity information of the first UE, IP address information of the first UE, and IP address information and a port number of the first UE.

The communication apparatus provided in this embodiment of this application can implement the processes implemented by the second network side device in the foregoing method embodiment, and achieve a same technical effect. To avoid repetition, details are not described herein again.

Optionally, as shown in FIG. 18, an embodiment of this application further provides a communication device 5000, including a processor 5001 and a memory 5002. The memory 5002 stores a program or an instruction that is executable on the processor 5001. For example, when the communication device 5000 is a UE, the program or the instruction is executed by the processor 5001 to implement the steps of the foregoing method embodiment on the first UE side or the second UE side, and a same technical effect can be achieved. To avoid repetition, details are not described herein again. When the communication device 5000 is a network side device, the program or the instruction is executed by the processor 5001 to implement the steps of the foregoing method embodiment on the first network side device side, the third network side device side, or the second network side device side, and a same technical effect can be achieved. To avoid repetition, details are not described herein again.

An embodiment of this application further provides a UE, including a processor and a communication interface. The communication interface is configured to: send an IMS registration message to a first network side device via a second UE, where the IMS registration message includes first information; and receive, via the second UE, a response message sent by the first network side device, to complete an IMS registration process. The first information includes at least one of the following: information used to indicate that the first UE is a remote UE; information used to indicate that the first UE sends a message via a relay UE; information used to indicate that the first UE has not performed network registration; information used to indicate that the first UE has not established an emergency PDU session; IP address information of the first UE; and a PLMN identifier of the first UE. This UE embodiment corresponds to the foregoing method embodiment on the first UE side. Each implementation process and implementation of the foregoing method embodiment may be applicable to this UE embodiment, and a same technical effect can be achieved.

An embodiment of this application further provides a UE, including a processor and a communication interface. The communication interface is configured to: receive a direct link establishment request sent by a first UE, where the direct link establishment request includes a first identifier of the first UE; and send the first identifier of the first UE to a third network side device, where the first identifier of the first UE is used by the third network side device to obtain a second identifier of the first UE. This UE embodiment corresponds to the foregoing method embodiment on the second UE side. Each implementation process and implementation of the foregoing method embodiment may be applicable to this UE embodiment, and a same technical effect can be achieved.

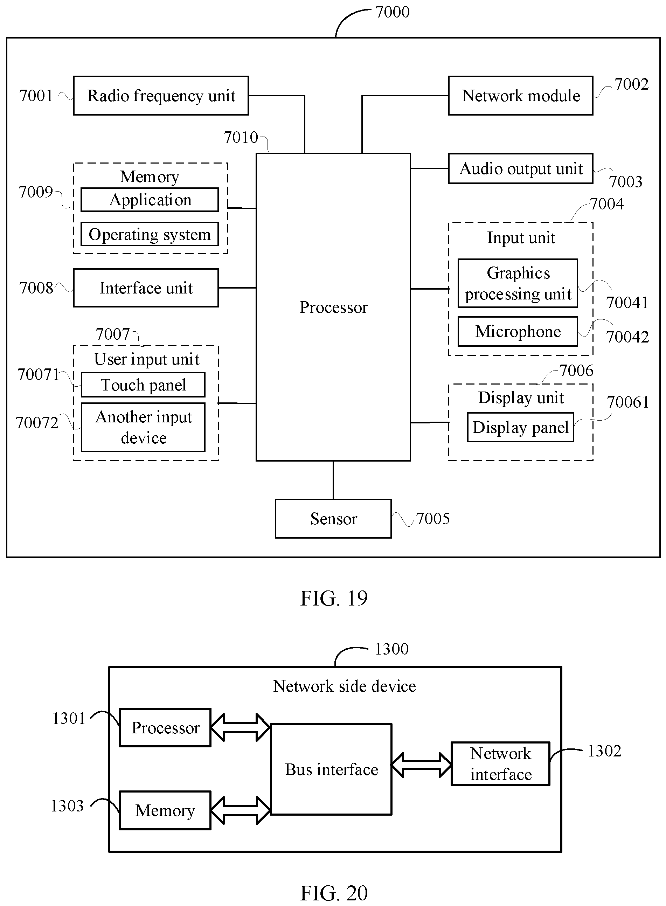

Specifically, FIG. 19 is a schematic structural diagram of hardware of a UE according to an embodiment of this application.

The UE 7000 includes but is not limited to components such as a radio frequency unit 7001, a network module 7002, an audio output unit 7003, an input unit 7004, a sensor 7005, a display unit 7006, a user input unit 7007, an interface unit 7008, a memory 7009, and a processor 7010.

A person skilled in the art can understand that the UE 7000 may further include the power supply (for example, a battery) that supplies power to each component. The power supply may be logically connected to the processor 7010 by using a power supply management system, so as to manage functions such as charging, discharging, and power consumption by using the power supply management system. The UE structure shown in FIG. 19 constitutes no limitation on the UE, and the UE may include more or fewer components than those shown in the figure, or combine some components, or have different component arrangements. Details are not described herein.

It should be understood that, in this embodiment of this application, the input unit 7004 may include a graphics processing unit (Graphics Processing Unit, GPU) 70041 and a microphone 70042, and the graphics processing unit 70041 processes image data of a still image or a video that is obtained by an image capturing apparatus (for example, a camera) in a video capturing mode or an image capturing mode. The display unit 7006 may include a display panel 70061. The display panel 70061 may be configured in a form such as a liquid crystal display or an organic light-emitting diode. The user input unit 7007 includes at least one of a touch panel 70071 and another input device 70072. The touch panel 70071 is also referred to as a touchscreen. The touch panel 70071 may include two parts: a touch detection apparatus and a touch controller. The another input device 70072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 7001 may transmit the downlink data to the processor 7010 for processing. In addition, the radio frequency unit 7001 may send uplink data to the network side device. Usually, the radio frequency unit 7001 includes but is not limited to an antenna, an amplifier, a transceiver, a coupler, a low noise amplifier, a duplexer, and the like.

The memory 7009 may be configured to store a software program or an instruction and various data. The memory 7009 may mainly include a first storage area for storing a program or an instruction and a second storage area for storing data. The first storage area may store an operating system, and an application or an instruction required by at least one function (for example, a sound playing function or an image playing function). In addition, the memory 7009 may be a volatile memory or a non-volatile memory, or the memory 7009 may include a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 7009 in this embodiment of this application includes but is not limited to these memories and a memory of any other proper type.

The processor 7010 may include one or more processing units. Optionally, an application processor and a modem processor are integrated into the processor 7010. The application processor mainly processes an operating system, a user interface, an application, and the like. The modem processor mainly processes a wireless communication signal, for example, a baseband processor. It can be understood that, alternatively, the modem processor may not be integrated into the processor 7010.

The radio frequency unit 7001 is configured to: send an IMS registration message to a first network side device via a second UE, where the IMS registration message includes first information; and receive, via the second UE, a response message sent by the first network side device, to complete an IMS registration process. The first information includes at least one of the following: information used to indicate that the first UE is a remote UE; information used to indicate that the first UE sends a message via a relay UE; information used to indicate that the first UE has not performed network registration; information used to indicate that the first UE has not established an emergency PDU session; IP address information of the first UE; and a PLMN identifier of the first UE.

This embodiment of this application provides a UE. A first UE may send an IMS registration message to a first network side device via a second UE, to carry first information, so that the first network side device executes, based on the first information, a related operation of obtaining identifier information of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service via the second UE.

Alternatively, the radio frequency unit 7001 is configured to: receive a direct link establishment request sent by a first UE, where the direct link establishment request includes a first identifier of the first UE; and send the first identifier of the first UE to a third network side device, where the first identifier of the first UE is used by the third network side device to obtain a second identifier of the first UE.

This embodiment of this application provides a UE. A second UE may receive a direct link establishment request sent by a first UE, where the request carries a first identifier of the first UE, and a second UE may send the first identifier of the first UE to a third network side device, so that the third network side device obtains a second identifier of the first UE, to complete an IMS registration process. This can avoid a problem that an error in a subsequent IMS procedure is caused and consequently a remote UE cannot initiate an emergency service because a first network side device cannot obtain identifier information of the remote UE. Therefore, the first UE executes an emergency service by using the second UE.

The UE provided in this embodiment of this application can implement the processes implemented by the first UE or the second UE in the foregoing method embodiment, and achieve a same technical effect. To avoid repetition, details are not described herein again.

An embodiment of this application further provides a network side device, including a processor and a communication interface. The communication interface is configured to receive an IMS registration message sent by a first UE, where the IMS registration message includes first information. The processor is configured to: determine, based on the first information, to skip a process of obtaining identifier information of the first UE; or send a first message to a second network side device, where the first message is used to request identifier information of the first UE, the first message includes the first information, and the first information is used by the second network side device to obtain the identifier information of the first UE. This network side device embodiment corresponds to the foregoing method embodiment of the first network side device. Each implementation process and implementation of the foregoing method embodiment may be applicable to this network side device embodiment, and a same technical effect can be achieved.

An embodiment of this application further provides a network side device, including a processor and a communication interface. The communication interface is configured to receive a first identifier of a first UE sent by a second UE. The processor is configured to obtain a second identifier of the first UE based on the first identifier of the first UE. This network side device embodiment corresponds to the foregoing method embodiment of the third network side device. Each implementation process and implementation of the foregoing method embodiment may be applicable to this network side device embodiment, and a same technical effect can be achieved.

An embodiment of this application further provides a network side device, including a processor and a communication interface. The communication interface is configured to receive a first message sent by a first network side device, where the first message is used to request identifier information of a first UE, and the first message includes first information. The processor is configured to obtain the identifier information of the first UE based on the first information. This network side device embodiment corresponds to the foregoing method embodiment of the second network side device. Each implementation process and implementation of the foregoing method embodiment may be applicable to this network side device embodiment, and a same technical effect can be achieved.

Specifically, an embodiment of this application further provides a network side device. As shown in FIG. 20, a network side device 1300 includes a processor 1301, a network interface 1302, and a memory 1303. The network interface 1302 is, for example, a common public radio interface (common public radio interface, CPRI).

Specifically, the network side device 1300 in this embodiment of the present invention further includes an instruction or a program that is stored in the memory 1303 and that is executable on the processor 1301. The processor 1301 invokes the instruction or the program in the memory 1303 to perform the method performed by the modules shown in FIG. 14, FIG. 16, or FIG. 17, and a same technical effect is achieved. To avoid repetition, details are not described herein again.

The network side device provided in this embodiment of this application can implement the processes implemented by the first network side device, the third network side device, or the second network side device in the foregoing method embodiment, and achieve a same technical effect. To avoid repetition, details are not described herein again.

An embodiment of this application further provides a readable storage medium. The readable storage medium stores a program or an instruction, and the program or the instruction is executed by a processor to implement the processes of the foregoing method embodiment, and a same technical effect can be achieved. To avoid repetition, details are not described herein again.

The processor is a processor in the communication device in the foregoing embodiment. The readable storage medium may be a non-volatile readable storage medium, or may be a non-transient readable storage medium. For example, the readable storage medium may include a computer readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the foregoing method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program/program product. The computer program/program product is stored in a storage medium, and the program/program product is executed by at least one processor to implement the processes of the foregoing method embodiment, and a same technical effect can be achieved. To avoid repetition, details are not described herein again.

An embodiment of this application further provides a communication system, including a first UE, a first network side device, a second UE, a third network side device, and a second network side device. The first UE may be configured to perform the steps of the communication method described above, the first network side device may be configured to perform the steps of the communication method described above, the second UE may be configured to perform the steps of the communication method described above, the third network side device may be configured to perform the steps of the communication method described above, and the second network side device may be configured to perform the steps of the communication method described above.

It should be noted that, in this specification, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are merely illustrative but not restrictive. Under the enlightenment of this application, a person of ordinary skill in the art can make many forms without departing from the purpose of this application and the protection scope of the claims, all of which fall within the protection of this application.

## Claims

1. A communication method, comprising:
sending, by a first UE, an internet protocol multimedia subsystem IMS registration message to a first network side device via a second UE, wherein the IMS registration message comprises first information; and
receiving, by the first UE via the second UE, a response message sent by the first network side device, to complete an IMS registration process, wherein
the first information comprises at least one of the following:
information used to indicate that the first UE is a remote UE;
information used to indicate that the first UE sends a message via a relay UE;
information used to indicate that the first UE has not performed network registration;
information used to indicate that the first UE has not established an emergency protocol data unit PDU session;
internet protocol IP address information of the first UE; and
a public land mobile network PLMN identifier of the first UE.

2. The method according to claim 1, wherein in a case that a PLMN identifier of the second UE is different from the PLMN identifier of the first UE, the first UE includes the first information in the IMS registration message.

3. The method according to claim 1 or 2, wherein the IMS registration message is an IMS emergency registration message.

4. The method according to claim 1, wherein the first network side device is a proxy call session control function P-CSCF.

5. The method according to claim 1, wherein the information used to indicate that the first UE is a remote UE comprises:
an access type, wherein
a value of the access type comprises the following:
3rd generation partnership project-new radio-proximity service-layer 3 user equipment to network relay 3GPP-NR-ProSe-L3UNR; or
3rd generation partnership project-evolved universal terrestrial radio access network-proximity service-user equipment to network relay 3GPP-E-UTRAN-ProSe-UNR.

6. A communication method, comprising:
receiving, by a first network side device, an internet protocol multimedia subsystem IMS registration message sent by a first UE, wherein the IMS registration message comprises first information; and
determining, by the first network side device based on the first information, to skip a process of obtaining identifier information of the first UE; or
sending, by the first network side device, a first message to a second network side device, wherein the first message is used to request identifier information of the first UE, the first message comprises the first information, and the first information is used to obtain the identifier information of the first UE.

7. The method according to claim 6, wherein in a case that the first network side device determines, based on the first information, to skip the process of obtaining the identifier information of the first UE,
the first information comprises at least one of the following:
information used to indicate that the first UE is a remote UE;
information used to indicate that the first UE sends a message via a relay UE;
information used to indicate that the first UE has not performed network registration; and
information used to indicate that the first UE has not established an emergency protocol data unit PDU session.

8. The method according to claim 6, wherein in a case that the first network side device sends the first message to the second network side device,
the first information comprises at least one of the following:
internet protocol IP address information of the first UE; and
a public land mobile network PLMN identifier of the first UE.

9. The method according to claim 8, wherein the IMS registration message further comprises second information, and the second information comprises at least one of the following:
information used to indicate that the first UE is a remote UE;
identity information of the first UE; and
port number information of the first UE.

10. The method according to claim 7 or 9, wherein the information used to indicate that the first UE is a remote UE comprises:
an access type, wherein
a value of the access type comprises the following:
3GPP-NR-ProSe-L3UNR; or
3GPP-E-UTRAN-ProSe-UNR.

11. The method according to any one of claims 6 to 10, wherein the method further comprises:
receiving, by the first network side device, the identifier information of the first UE sent by the second network side device.

12. The method according to claim 6, wherein the second network side device is a policy control function PCF.

13. A communication method, comprising:
receiving, by a second UE, a direct link establishment request sent by a first UE, wherein the direct link establishment request comprises a first identifier of the first UE; and
sending, by the second UE, the first identifier of the first UE to a third network side device, wherein the first identifier of the first UE is used to obtain a second identifier of the first UE.

14. The method according to claim 13, wherein the first identifier of the first UE comprises a globally unique temporary user equipment identity GUTI or a subscription concealed identifier SUCI of the first UE.

15. The method according to claim 13, wherein the second identifier of the first UE comprises at least one of the following: a subscription permanent identifier SUPI, a permanent equipment identifier PEI, and a generic public subscription identifier GPSI.

16. The method according to any one of claims 13 to 15, wherein the sending, by the second UE, the first identifier of the first UE to a third network side device comprises:
sending, by the second UE, the first identifier of the first UE to the third network side device via a non-access stratum NAS message;
or
sending, by the second UE, the first identifier of the first UE to the third network side device via a remote UE report Remote UE Report message.

17. The method according to claim 16, wherein in a case that the first identifier of the first UE is sent via the NAS message, the third network side device is an access and mobility management function AMF; or
in a case that the first identifier of the first UE is sent via the remote UE report message, the third network side device is a session management function SMF.

18. A communication method, comprising:
receiving, by a third network side device, a first identifier of a first UE sent by a second UE; and
obtaining, by the third network side device, a second identifier of the first UE based on the first identifier of the first UE.

19. The method according to claim 18, wherein the receiving, by a third network side device, a first identifier of a first UE sent by a second UE comprises:
receiving, by the third network side device, a non-access stratum NAS message sent by the second UE, wherein the NAS message comprises the first identifier of the first UE.

20. The method according to claim 19, wherein the NAS message further comprises identity information of the first UE.

21. The method according to claim 18, wherein the receiving, by a third network side device, a first identifier of a first UE sent by a second UE comprises:
receiving, by the third network side device, a remote UE report message sent by the second UE, wherein the remote UE report message comprises the first identifier of the first UE.

22. The method according to claim 21, wherein the obtaining, by the third network side device, a second identifier of the first UE based on the first identifier of the first UE comprises:
sending, by the third network side device, a request message to a fourth network side device, wherein the request message comprises the first identifier of the first UE, and the first identifier of the first UE is used to request the second identifier of the first UE; and
receiving, by the third network side device, the second identifier of the first UE obtained by the fourth network side device from a fifth network side device that serves the first UE.

23. The method according to claim 18, wherein the obtaining, by the third network side device, a second identifier of the first UE based on the first identifier of the first UE comprises:
sending, by the third network side device, an authentication request to a home authentication server function AUSF and/or a home unified data management UDM of the first UE based on the first identifier of the first UE, wherein the authentication request comprises the first identifier of the first UE; and
receiving, by the third network side device, a subscription permanent identifier SUPI that is corresponding to the first identifier of the first UE and that is obtained by the AUSF and/or the UDM based on the first identifier of the first UE.

24. The method according to claim 18, wherein the method further comprises:
sending, by the third network side device, the second identifier of the first UE to a second network side device.

25. A communication method, comprising:
receiving, by a second network side device, a first message sent by a first network side device, wherein the first message is used to request identifier information of a first UE, and the first message comprises first information; and
obtaining, by the second network side device, the identifier information of the first UE based on the first information.

26. The method according to claim 25, wherein the first information comprises at least one of the following:
internet protocol IP address information of the first UE; and
a public land mobile network PLMN identifier of the first UE.

27. The method according to claim 25 or 26, wherein the first message further comprises identity information of the first UE, and the identity information of the first UE is used to obtain the identifier information of the first UE.

28. The method according to claim 25 or 26, wherein the first message further comprises a port number of the first UE, and the port number of the first UE is used to obtain the identifier information of the first UE.

29. The method according to claim 25, wherein the method further comprises:
receiving, by the second network side device, third information sent by a third network side device, wherein the third information is used to obtain the identifier information of the first UE, wherein
the third information comprises at least one of the following: identity information of the first UE, IP address information of the first UE, and the IP address information and a port number of the first UE.

30. A communication method, comprising:
sending, by a first network side device, a third message to a second network side device when an internet protocol multimedia subsystem IMS registration message received from a first UE does not comprise first information and it is determined that the first network side device does not have an IMS network-to-network interface NNI with a home public land mobile network HPLMN of the first UE, wherein the third message is used to request identifier information of the first UE.

31. The method according to claim 30, wherein that the IMS registration message does not comprise the first information comprises: a value of an access type in the IMS registration message does not comprise 3GPP-NR-ProSe-L3UNR or 3GPP-E-UTRAN-ProSe-UNR.

32. The method according to claim 30 or 31, wherein the first information comprises at least one of the following:
information used to indicate that the first UE is a remote UE;
information used to indicate that the first UE sends a message via a relay UE;
information used to indicate that the first UE has not performed network registration; and
information used to indicate that the first UE has not established an emergency protocol data unit PDU session.

33. The method according to any one of claims 30 to 32, wherein the first network side device is a proxy call session control function P-CSCF.

34. The method according to any one of claims 30 to 33, wherein the second network side device is a policy control function PCF.

35. A communication apparatus, applied to a first UE and comprising a sending module and a receiving module, wherein
the sending module is configured to send an internet protocol multimedia subsystem IMS registration message to a first network side device via a second UE, wherein the IMS registration message comprises first information; and
the receiving module is configured to receive, via the second UE, a response message sent by the first network side device, to complete an IMS registration process, wherein
the first information comprises at least one of the following:
information used to indicate that the first UE is a remote UE;
information used to indicate that the first UE sends a message via a relay UE;
information used to indicate that the first UE has not performed network registration;
information used to indicate that the first UE has not established an emergency protocol data unit PDU session;
internet protocol IP address information of the first UE; and
a public land mobile network PLMN identifier of the first UE.

36. A communication apparatus, applied to a first network side device and comprising a receiving module and an execution module, wherein
the receiving module is configured to receive an internet protocol multimedia subsystem IMS registration message sent by a first UE, wherein the IMS registration message comprises first information; and
the execution module is configured to: determine, based on the first information, to skip a process of obtaining identifier information of the first UE; or send a first message to a second network side device, wherein the first message is used to request identifier information of the first UE, the first message comprises the first information, and the first information is used to obtain the identifier information of the first UE.

37. A communication apparatus, applied to a second UE and comprising a receiving module and a sending module, wherein
the receiving module is configured to receive a direct link establishment request sent by a first UE, wherein the direct link establishment request comprises a first identifier of the first UE; and
the sending module is configured to send the first identifier of the first UE to a third network side device, wherein the first identifier of the first UE is used to obtain a second identifier of the first UE.

38. A communication apparatus, applied to a third network side device and comprising a receiving module and an obtaining module, wherein
the receiving module is configured to receive a first identifier of a first UE sent by a second UE; and
the obtaining module is configured to obtain a second identifier of the first UE based on the first identifier of the first UE.

39. A communication apparatus, applied to a second network side device and comprising a receiving module and an obtaining module, wherein
the receiving module is configured to receive a first message sent by a first network side device, wherein the first message is used to request identifier information of a first UE, and the first message comprises first information; and
the obtaining module is configured to obtain the identifier information of the first UE based on the first information.

40. A communication apparatus, applied to a first network side device and comprising a sending module, wherein
the sending module is configured to send a third message to a second network side device when an internet protocol multimedia subsystem IMS registration message received from a first UE does not comprise first information and it is determined that the first network side device does not have an IMS network-to-network interface NNI with a home public land mobile network HPLMN of the first UE, wherein the third message is used to request identifier information of the first UE.

41. A UE, comprising a processor and a memory, wherein the memory stores a program or an instruction that is executable on the processor, and when the program or the instruction is executed by the processor, the steps of the communication method according to any one of claims 1 to 5 or the steps of the communication method according to any one of claims 13 to 17 are implemented.

42. A network side device, comprising a processor and a memory, wherein the memory stores a program or an instruction that is executable on the processor, and when the program or the instruction is executed by the processor, the steps of the communication method according to any one of claims 6 to 12, or the steps of the communication method according to any one of claims 18 to 24, or the steps of the communication method according to any one of claims 25 to 29, or the steps of the communication method according to any one of claims 30 to 34 are implemented.

43. A readable storage medium, wherein the readable storage medium stores a program or an instruction, and when the program or the instruction is executed by a processor, the steps of the communication method according to any one of claims 1 to 5, or the steps of the communication method according to any one of claims 6 to 12, or the steps of the communication method according to any one of claims 13 to 17, or the steps of the communication method according to any one of claims 18 to 24, or the steps of the communication method according to any one of claims 25 to 29, or the steps of the communication method according to any one of claims 30 to 34 are implemented.
